# EUROPEAN PATENT APPLICATION

(11) **EP 2 208 928 A1**
(43) Date of publication of application: **21.07.2010**
(21) Application number: 08845810.4
(22) Date of filing: 28.10.2008
(51) Int. Cl.: F23K 5/12, B01F 3/08, C25B 1/04

(54) **COMBUSTION SYSTEM, COMBUSTION METHOD, FUEL FLUID, PROCESS FOR PRODUCING THE FUEL FLUID, AND APPARATUS FOR PRODUCING THE FUEL FLUID**

(30) Priority: 02.11.2007 JP 2007286812; 26.11.2007 JP 2007305132; 07.08.2008 JP 2008203828; 13.10.2008 JP 2008264707
(71) Applicant: Arai, Yusho, Fuchu-shi Tokyo 183-0021 (JP)
(72) Inventor: Arai, Yusho, Fuchu-shi Tokyo 183-0021 (JP)
(74) Representative: Schön, Christoph
(86) International application number: PCT/JP2008/069573
(87) International publication number: WO 2009/057607

(57) **Abstract**

A combustion system, a combustion method and a fuel fluid, which can improve combustion efficiency of fuel while suppressing consumption of the fuel when the fuel is combusted, are provided as well as a method for producing the fuel fluid and an apparatus for producing the fuel fluid are provided. A combustion system 100 includes an electrolyzed water producing section 110 which electrolyzes water to produce electrolyzed water; a hydrogen mixing section 120 which mixes the electrolyzed water, which is produced in the electrolyzed water producing section 110 and in which hydrogen is dissolved, and gaseous hydrogen generated in the electrolyzed water producing section 110 with each other; a fuel storage section 30 which stores fuel therein; a fuel mixing section 140 which mixes the electrolyzed water, which is produced in the electrolyzed water producing section 110 and in which hydrogen is dissolved, and the fuel stored in the fuel storage section with each other; a mist forming section 150 which forms a mixed liquid obtained in the fuel mixing section 140 into mist; and a combustion section 160 which combusts the mist produced in the mist forming section 150.

## Description

### Background of the Invention

### 1. Field of the invention

The present invention relates to a combustion system, a combustion method, a fuel fluid, a method for producing the fuel fluid, and an apparatus for producing the fuel fluid.

### 2. Description of the Prior Art

When petroleum is used as power source, oil is sprayed and combusted to obtain the power source. A technique of mixing oil in the form of emulsion with gaseous hydrogen and combusting the same has been proposed (see Patent Literature 1.)
Patent Literature 1: Japanese Unexamined Patent Application Publication No. 2005-77017

### Summary of the Invention

It is an object of the present invention to provide a combustion system, a combustion method and a fuel fluid, which can improve combustion efficiency of fuel while suppressing consumption of the fuel, as well as a method for producing the fuel fluid and an apparatus for producing the fuel fluid.

### 1. Combustion System

A first combustion system according to a first aspect of the present invention includes:
an electrolyzed water producing section for electrolyzing water or an aqueous electrolytic solution to produce electrolyzed water;
a fuel storage section for storing fuel;
a fuel mixing section for mixing the electrolyzed water in which hydrogen generated in the electrolyzed water producing section is dissolved with the fuel stored in the fuel storage section; and
a combustion section for combusting a mixed fluid obtained in the fuel mixing section.

In the case of dispersing fuel in water, conventionally, addition of a surfactant is performed to achieve emulsification, thereby obtaining an emulsified state, however, the present inventor has found that it is possible to disperse fuel in water by using electrolyzed water without adding a surfactant. The present inventor has also found that, when electrolyzed water and fuel are mixed with each other, combustion efficiency is improved as compared with that in the case in which simple water and fuel are mixed with each other. Therefore, the combustion system of the first aspect of the present invention makes it possible to improve the combustion efficiency while suppressing fuel consumption.

In addition, when fuel is mixed with electrolyzed water, the amount of water vapor generated by combustion is increased as compared with that in the case in which fuel is not mixed with electrolyzed water. There is the advantage that, the more the amount of water vapor is, the higher thermal conductivity becomes in the case in which heat is transferred to a heat exchanger.

Further, there is the advantage that, through mixing electrolyzed water, the temperature of flame produced by combustion lowers, and the generation of far infrared radiation is increased by the amount of reduction in the temperature of flame and the effect of thermal conductivity becomes high. In the case of heat-transferring gas generated by combustion, the effect of heat transfer can be increased, and by an amount corresponding thereto, the amount of fuel consumption can be reduced.

In the first aspect of the present invention, a mist forming section for forming mixed liquid obtained in the fuel mixing section into mist is included, where the mist produced in the mist forming section can be combusted in the combustion section. The combustion efficiency can be improved by mist formation.

The combustion system may include a hydrogen mixing section for mixing the electrolyzed water, which is produced in the electrolyzed water producing section and in which hydrogen is dissolved, and gaseous hydrogen generated in the electrolyzed water producing section with each other, before the electrolyzed water and the fuel are mixed with each other in the fuel mixing section.

This makes it possible to increase the percentage of content of hydrogen included in the mist of the mixed liquid introduced in the combustion section.

A second combustion system according to a second aspect of the present invention includes a combustion section for combusting a mixed fluid obtained by mixing electrolyzed water and fuel with each other. Since the electrolyzed water is included in the mixed fluid, this aspect of the present invention also makes it possible to obtain an effect of operation similar to that in the first combustion system.

In the first and second aspects of the present invention, the mixed fluid may be compressed before the mixed fluid is supplied to the combustion section. This makes it possible to further improve the combustion efficiency.

In the first and second aspects of the present invention, bubbles of hydrogen or oxygen may be included in the mixed fluid. This makes it possible to further improve the combustion efficiency.

In the first and second aspects of the present invention, the mixed fluid may be vaporized by combustion heat in the combustion section, and the mixed fluid vaporized may be used for combustion in the combustion section. This makes it possible to vaporize the mixed fluid without the need to further provide a vaporizing section for the mixed fluid.

The fuel is more effective if it contains an oil fuel and alcohol.

### 2. Combustion Method

A first combustion method according to a third aspect of the present invention includes steps of:
(A) electrolyzing water in an electrolyzed water producing section to produce electrolyzed water;
(B) mixing the electrolyzed water, which is produced in the electrolyzed water producing section and in which hydrogen is dissolved, and fuel stored in the fuel storage section with each other; and
(C) combusting a mixed fluid obtained at the step (B) in a combustion section.

The third aspect of the present invention makes it possible to improve combustion efficiency while suppressing fuel consumption.

In addition, in the third aspect of the present invention, the mixed fluid obtained at the step (B) may be formed into mist before the step (C) to combust the mixed fluid formed into mist. This makes it possible to further improve the combustion efficiency.

The third aspect of the present invention may include a step of:
(E) mixing the electrolyzed water, which is produced in the electrolyzed water producing section and in which hydrogen is dissolved, and gaseous hydrogen generated in the electrolyzed water producing section with each other, before mixing the electrolyzed water and the fuel with each other at the step (B).

This makes it possible to increase the percentage of content of hydrogen included in the mist of mixed liquid introduced in the combustion section.

A second combustion method according to a fourth aspect of the present invention includes a step of combusting a mixed fluid obtained by mixing electrolyzed water and fuel with each other in a combustion section. This makes it possible to obtain an effect of operation similar to that in the first combustion method.

The second combustion method according to the third and fourth aspects of the invention further includes a step of compressing the mixed fluid in a fluid compressing section before the mixed fluid is supplied to the combustion section.

In the third and fourth aspects of the present invention, bubbles of hydrogen or oxygen may be included in the mixed fluid. This makes it possible to further improve the combustion efficiency.

In the third and fourth aspects of the present invention, the mixed fluid may be vaporized by combustion heat in the combustion section, and the mixed fluid vaporized may be used for combustion in the combustion section. This makes it possible to vaporize the mixed fluid without the need to further provide a vaporizing section.

The fuel is more effective if it contains an oil fuel and alcohol.

### 3. Fuel Fluid

A fuel fluid according to a fifth aspect of the present invention includes a fuel composed of an organic compound and electrolyzed water obtained by electrolyzing water or an aqueous electrolytic solution.

In the case of dispersing fuel in water, conventionally, addition of a surfactant is performed to obtain an emulsified state, however, the present inventor has found that it is possible to disperse fuel in water by using electrolyzed water without adding a surfactant. The present inventor has also found that, when electrolyzed water and a fuel composed of an organic compound are mixed with each other, combustion efficiency is improved as compared with that in the case in which simple water and a fuel composed of an organic compound are mixed with each other. Therefore, the fifth aspect of the present invention makes it possible to improve the combustion efficiency while suppressing fuel consumption.

In addition, when fuel is mixed with electrolyzed water, the amount of water vapor generated by combustion is increased as compared with that in the case in which fuel is not mixed with electrolyzed water. There is the advantage that, the more the amount of water vapor is, the higher thermal conductivity becomes in the case in which heat is transferred to a heat exchanger.

Further, there is the advantage that, through mixing electrolyzed water, the temperature of flame produced by combustion lowers, and the generation of far infrared radiation is increased by the amount of reduction in the temperature of flame and the effect of thermal conductivity becomes high. In the case of heat-transferring gas generated by combustion, the effect of heat transfer can be increased, and by an amount corresponding thereto, the amount of fuel consumption can be reduced.

In the present invention,
the electrolyzed water is produced by an apparatus for producing electrolyzed water, wherein
the apparatus for producing electrolyzed water may include:
   an anode chamber provided with an anode;
   a cathode chamber provided with a cathode;
   a middle chamber which contains an aqueous electrolytic solution, provided between the anode chamber and the cathode chamber;
   a first partitioning membrane, made of an anion exchange membrane, for separating the anode chamber and the middle chamber from each other; and
   a second partitioning membrane, made of a cation exchange membrane, for separating the cathode chamber and the middle chamber from each other.

The apparatus for producing electrolyzed water may be configured such that the anode chamber and the cathode chamber are communicated with each other so that water can move bidirectionally between the anode chamber and the cathode chamber. This makes it possible to suppress buildup of scale to the cathode chamber, so that continuous operation becomes possible.

The electrolyzed water may be electrolyzed water produced on the cathode side or electrolyzed water produced on the anode side.

The percentage of the electrolyzed water in the fuel fluid may be 70% by weight or less.

The fuel composed of an organic compound may contain an oil fuel and alcohol. Containing alcohol makes it possible to further improve the combustion efficiency.

A method for producing a fuel fluid according to a sixth aspect of the present invention includes a step of mixing a fuel composed of an organic compound and electrolyzed water obtained by electrolyzing water or an aqueous electrolytic solution with each other.

An apparatus for producing a fuel fluid according to a seventh aspect of the present invention includes a mixing section for mixing a fuel composed of an organic compound and electrolyzed water obtained by electrolyzing water or an aqueous electrolytic solution with each other.

It is preferred that the mist forming section is of a cyclonic system, in particular, it is preferred that, in a cyclonic-system air purification apparatus including air sucking and delivering means adapted to suck air that includes floating substances and that is to be purified to deliver the same to a cyclone, an introducing section for introducing the air delivered from the air sucking and delivering means in the cyclone, and the cyclone provided with an inner cylinder and an outer cylinder, such an arrangement is adopted that a mist spraying sections for gas-liquid contact are disposed in the introducing section and an upper portion of the cyclone, a spiral fin is fixed on the inner cylinder, a clearance is provided between an outer periphery of the spiral fin and an inner wall of the outer cylinder in order to prevent them from contacting each other, a net-like structure for generating air turbulence is provided near the air introducing section in an upper portion of the cyclone, a liquid pool is provided in a lower portion of the cyclone, the spiral fin is not provided in an approximately upper half of the cyclone for a space for gas-liquid contact, and the spiral fin is provided in an approximately lower half of the cyclone for a space giving centrifugal force to the floating substances put in gas-liquid contact.

The fuel composed of an organic compound implies an oil fuel (petroleum such as heating oil or gasoline, oil such as plant oil or animal oil), alcohol or the like.

### Brief Description of the Drawings

FIG. 1 is a diagram schematically illustrating a combustion system according to a first embodiment;
FIG. 2 is a diagram schematically illustrating a combustion system according to a second embodiment;

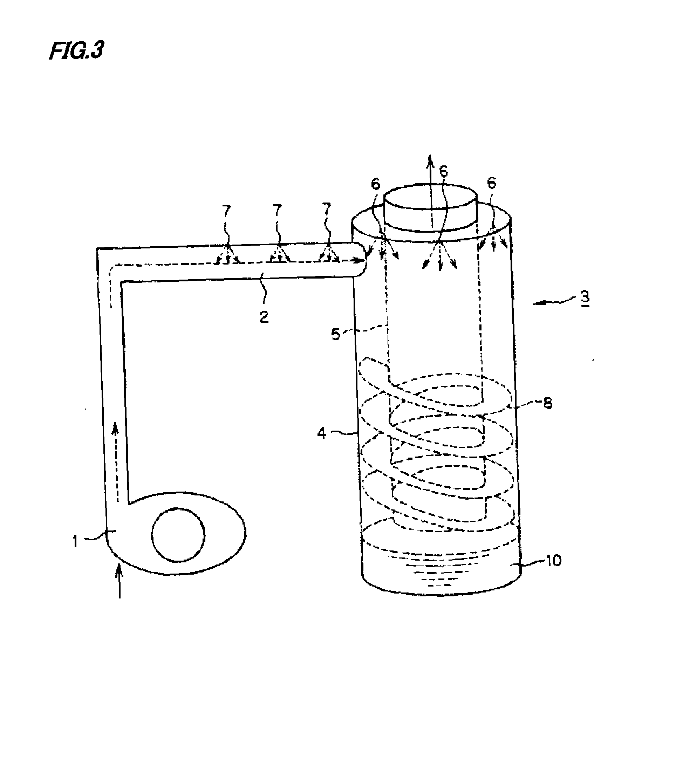

FIG. 3 is a diagram schematically illustrating a cyclone-system spraying apparatus;
FIG. 4 is a diagram schematically illustrating another cyclone-system spraying apparatus;
FIGS. 5A and 5B are diagrams schematically illustrating upper cross-sections of other cyclone-system spraying apparatuses;
FIG. 6 is a diagram illustrating a method for vaporizing a mixed fuel;
FIG. 7 is a diagram illustrating an electrolysis apparatus;
FIG. 8 is a diagram schematically illustrating an apparatus for producing electrolyzed water;
FIG. 9 is a diagram for explaining communication holes;
FIG. 10 is an illustrative diagram of an anion exchange membrane according to a first modified embodiment;
FIG. 11 is an explanatory diagram illustrating the principle relating to the first modified embodiment;
FIG. 12 is a diagram schematically illustrating an apparatus for producing electrolyzed water according to a second modified embodiment;
FIG. 13 is a view schematically illustrating side faces of a cathode and a sheet member according to the second modified embodiment;
FIG. 14 is a view schematically illustrating the surface of the cathode and the sheet member according to the second modified embodiment;
FIG. 15 is a view schematically illustrating the surface of the sheet member according to the second modified embodiment;
FIG. 16 is a view schematically illustrating the surface of the cathode according to the second modified embodiment;
FIG. 17 is an explanatory view for explaining the effects of operation of an electrolysis apparatus according to the second modified embodiment;
FIG. 18 is a diagram schematically illustrating an electrolysis apparatus according to a third modified embodiment;
FIG. 19 is a diagram schematically illustrating an electrolysis apparatus according to a fourth modified embodiment;
FIGS. 20A to 20D are diagrams schematically illustrating electrodes according to a fifth modified embodiment;
FIG. 21 is a diagram schematically illustrating an electrolysis apparatus according to a sixth modified embodiment;
FIG. 22 is a diagram schematically illustrating an electrolysis apparatus according to a seventh modified embodiment;
FIG. 23 is a diagram schematically illustrating an electrolysis apparatus according to an eighth modified embodiment;
FIG. 24 is a diagram schematically illustrating an electrolysis apparatus according to a ninth modified embodiment;
FIG. 25 is a diagram schematically illustrating an electrolysis apparatus according to the ninth modified embodiment;
FIG. 26 is a diagram schematically illustrating an electrolysis apparatus according to the ninth modified embodiment;
FIG. 27 is a diagram illustrating an example of the application of the combustion system according to the present invention to a turbine engine;
FIG. 28 is a diagram illustrating an example of the application of the combustion system according to the present invention to a diesel engine; and
FIG. 29 is a diagram illustrating an example of the application of the combustion system according to the present invention to a mixed-fuel combustion system.

### Best Mode for Carrying out the Invention

Preferred embodiments of the present invention will be explained below in reference to the drawings.

### 1. First Embodiment

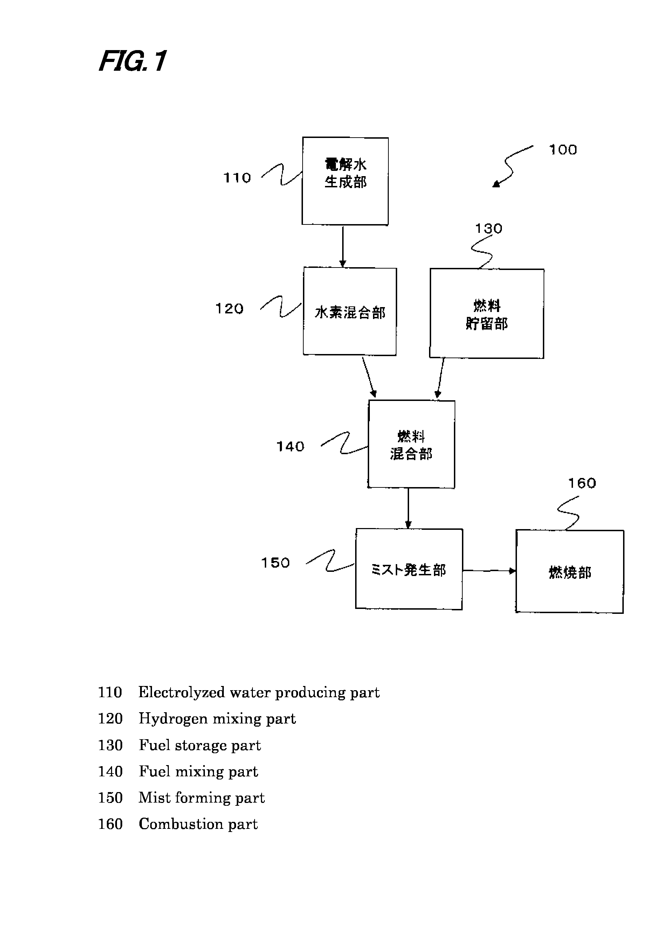

FIG. 1 is an illustrative diagram of a first combustion system.

A combustion system 100 includes an electrolyzed water producing section 110, a hydrogen mixing section 120, a fuel storage section 130, a fuel mixing section 140, a mist forming section 150, and a combustion section 160.

The electrolyzed water producing section 110 is an electrolysis section for electrolyzing water or an aqueous electrolytic solution. The electrolyzed water producing section 110 may electrolyze water or an aqueous electrolytic solution such as sodium chloride or potassium chloride to produce electrolyzed water. The following reaction occurs in a cathode chamber of the electrolyzed water producing section 110.

H₂O + 2e⁻ → 1/2H₂ + OH⁻

The electrolyzed water producing section 110 may be a three-chamber electrolysis apparatus (electrolysis apparatus in which an anode chamber is provided on one side of a middle chamber storing an aqueous electrolytic solution via an anion exchange membrane and a cathode chamber is provided on the other side thereof via a cation exchange membrane) or a two-chamber electrolysis apparatus (electrolysis apparatus in which separating into an anode chamber and a cathode chamber is performed by a partitioning membrane). It is preferred that the pH of the electrolyzed water produced in the cathode chamber is around 12.

The aqueous electrolytic solution also includes an aqueous solution only with cations or anions. That is, in the tree-chamber electrolysis apparatus, anions in the middle chamber move to the anode chamber, and cations in the middle chamber move to the cathode chamber. Therefore, an aqueous solution in the anode chamber becomes an aqueous solution containing anions originated from the middle chamber, and an aqueous solution in the cathode chamber becomes an aqueous solution containing cations originated from the middle chamber.

The hydrogen mixing section 120 is for mixing electrolyzed water, which is produced in the electrolyzed water producing section 110 and in which hydrogen is dissolved, and gaseous hydrogen generated in the electrolyzed water producing section 110 with each other. The hydrogen mixing section 120 may be a known gas-liquid mixer.

The fuel storage section 130 stores fuel therein. It is preferred that the fuel stored in the fuel storage section 130 is a hydrocarbon fuel, for example, petroleum, plant oil, animal oil, or alcohol. The fuel storage section 130 may be configured using a known tank.

The fuel mixing section 140 is for mixing the electrolyzed water, which is produced in the electrolyzed water producing section 110 and in which hydrogen is dissolved, and the fuel stored in the fuel storage section 130 with each other. The fuel mixing section 140 may be a known one for mixing fuel with water. The fuel mixing section 140 serves as an apparatus for producing a fuel fluid according to the embodiment.

It is preferred that the mist forming section 150 is configured according to the technique disclosed in Japanese Unexamined Patent Application Publication No. 2006-141864 whose inventor is the present inventor or the technique disclosed in Japanese Unexamined Patent Application Publication No. 2006-320856. In particular, the mist forming section 150 may be a cyclonic-system air purification apparatus including air sucking and delivering means adapted to suck air that contains floating substances and that is to be purified to deliver the same to a cyclone, an introducing section for introducing the air delivered from the air sucking and delivering means in the cyclone, and the cyclone provided with an inner cylinder and an outer cylinder, wherein such an arrangement can be adopted that mist spraying sections for gas-liquid contact are disposed in the introducing section and an upper portion of the cyclone, a spiral fin is fixed on the inner cylinder, a clearance is provided between an outer periphery of the spiral fin and an inner wall of the outer cylinder in order to prevent them from contacting each other, a net-like structure for generating air turbulence is provided near the air introducing section in an upper portion of the cyclone, a liquid pool is provided in a lower portion of the cyclone, the spiral fin is not provided in an approximately upper half of the cyclone for a space for gas-liquid contact, and the spiral fin is provided in an approximately lower half of the cyclone for a space giving centrifugal force to the floating substances put in gas-liquid contact.

The combustion section 160 may be a known combustion apparatus. A wide variety of combustion apparatuses used as an internal combustion engine, such as a combustion apparatus used in a thermal power plant or a combustion apparatus such as a gasoline engine or a diesel engine, is applied to the combustion section 160. It is preferred that the combustion section 160 has a pilot burner for ignition. As a fuel for the pilot burner, a mixed fluid may be used, or only an oil fuel may be used. In addition, it is preferred that the combustion section 160 has a spray nozzle for spraying the mist formed in the mist forming section 150. The mist forming section 150 may function as a spray nozzle.

### (Combustion Method)

Next, a combustion method will be explained.

First, water is electrolyzed in the electrolyzed water producing section 110 to produce electrolyzed water in which hydrogen is dissolved. The electrolyzed water is introduced in the hydrogen mixing section 120 and gaseous hydrogen generated in the electrolyzed water producing section 110 is introduced in the hydrogen mixing section 120 to mix the electrolyzed water with the gaseous hydrogen.

Next, in the fuel mixing section 140, fuel stored in the fuel storage section 130 is mixed with the electrolyzed water mixed with the gaseous hydrogen in the hydrogen mixing section 120. Thereby, a fuel fluid according to the embodiment is produced.

Next, a mixed liquid mixed in the fuel mixing section 140 is introduced in the mist forming section 150 to form the mixed liquid into mist.

Next, the mixed liquid in the form of mist is introduced in the combustion section 150 to combust the same.

In the case of dispersing fuel in water, conventionally, addition of a surfactant is performed to achieve emulsification, thereby obtaining an emulsified state, however, it is possible to disperse fuel in water by using electrolyzed water without adding a surfactant. In addition, a mixed liquid of fuel and electrolyzed water can reliably and easily be formed into mist without emulsifying the fuel to mix the same with the electrolyzed water. Therefore, it is possible to introduce the mixed liquid reliably in the combustion section.

In addition, when fuel is mixed with electrolyzed water, the amount of water vapor generated by combustion is increased as compared with that in the case in which fuel is not mixed with electrolyzed water. There is the advantage that, the more the amount of water vapor is, the higher thermal conductivity becomes in the case in which heat is transferred to a heat exchanger.

Further, there is the advantage that, through mixing electrolyzed water, the temperature of flame produced by combustion lowers, and the generation of far infrared radiation is increased by the amount of reduction in the temperature of flame and the effect of thermal conductivity becomes high. In the case of heat-transferring gas generated by combustion, the effect of heat transfer can be increased, and by an amount corresponding thereto, the amount of fuel consumption can be reduced.

### 2. Second Embodiment

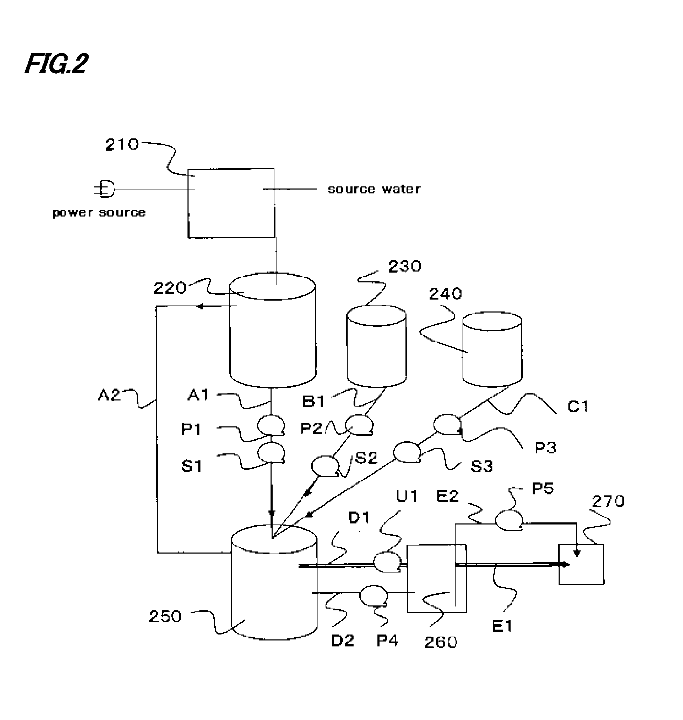

FIG. 2 illustrates a combustion system according to a second embodiment.

A combustion system 200 includes an electrolyzed water producing section 210, an electrolyzed water storage section 220, a fuel storage section 230 for an oil fuel, an alcohol storage section 240 , a fuel mixing section 250, a mist forming section 260, and a combustion section 270. That is, since the functions of the respective components are basically unchanged, except that the fuel storage section 230 for an oil fuel and the alcohol storage section 240 are provided as fuel storage sections, detailed explanations about them will be omitted.

Two lines A1 and A2 may be provided between the electrolyzed water storage section 220 and the fuel mixing section 250. One line A1 is a line for directing the electrolyzed water to the fuel mixing section 250. The other line A2 is a line for directing gaseous hydrogen existing in the electrolyzed water storage section 220 to the fuel mixing section 250. If needed, a supply pump P1 and a flowmeter S1 may be provided between the electrolyzed water storage section 220 and the fuel mixing section 250. Likewise, if needed, supply pumps P2 and P3 and flowmeters S2 and S3 may be provided between the fuel mixing section 250 and the fuel storage section 230 for an oil fuel and between the fuel mixing section 250 and the alcohol storage section 240, respectively.

Two lines D1 and D2 may also be provided between the fuel mixing section 250 and the mist forming section 260. One line D1 is a line for directing gas of fuel mixed in the fuel mixing section 250 to the mist forming section 260. The other line D2 is a line for directing liquid of the fuel mixed in the fuel mixing section 250 to the mist forming section 260. If needed a supply blower U1 may be provided in the line D1 for directing the gas to the mist forming section 260. A supply pump P4 may be provided in the line D2 for directing the liquid fuel to the mist forming section 260.

Two lines E1 and E2 may also be provided between the mist forming section 260 and the combustion section 270. One line E1 is a line for directing the fuel in the form of mist or gas to the combustion section 270. The other line E2 is a line for directing the fuel in the form of liquid to the combustion section 270. If needed, a supply pump P5 may be provided in the line for directing the fuel in the form of liquid to the combustion section 270.

According to this embodiment, the electrolyzed water produced in the electrolyzed water producing section 210 is stored in the electrolyzed water storage section 220. The electrolyzed water and the gaseous hydrogen is sent from the electrolyzed water storage section 220 to the fuel mixing section 250, and an oil fuel sent from the fuel storage section 230 for an oil fuel and alcohol sent from the alcohol storage section 240 are mixed with each other in the fuel mixing section 250. A fuel fluid mixed in the fuel mixing section 250 is formed into mist and vaporized in the mist forming section 260, and is sent to the combustion section 270 to be combusted.

By adding alcohol in water and fuel additionally, dispersion of the oil fuel in the water is facilitated, and combustion efficiency is improved.

In addition, when fuel is mixed with electrolyzed water, the amount of water vapor generated by combustion is increased as compared with that in the case in which fuel is not mixed with electrolyzed water. There is the advantage that, the more the amount of water vapor is, the higher thermal conductivity becomes in the case in which heat is transferred to a heat exchanger.

Further, there is the advantage that, through mixing electrolyzed water, the temperature of flame produced by combustion lowers, and the generation of far infrared radiation is increased by the amount of reduction in the temperature of flame and the effect of thermal conductivity becomes high. In the case of heat-transferring gas generated by combustion, the effect of heat transfer can be increased, and by an amount corresponding thereto, the amount of fuel consumption can be reduced.

Incidentally, the oil fuel may be petroleum such as heating oil or gasoline, animal oil, plant oil, or the like. The fuel mixing section serves as an apparatus for producing a fuel fluid according to the embodiment.

### 3. Fuel Fluid

A fuel fluid according to an embodiment includes a fuel composed of an organic compound, and electrolyzed water obtained by electrolyzing water or an aqueous electrolytic solution. The electrolyzed water is produced by an apparatus for producing electrolyzed water (hereafter referred as to "electrolysis apparatus"), and may be electrolyzed water produced on a cathode side or electrolyzed water produced on an anode side. The electrolyzed water produced on the anode side contains hydrogen ions in abundance. The electrolyzed water produced on the cathode side contains hydrogen molecules in abundance. In view of the combustion efficiency, the electrolyzed water produced on the cathode side is preferable. It is preferred that the percentage of the electrolyzed water in the fuel fluid is 70% by weight or less. The fuel composed of an organic compound may be an oil fuel or alcohol, but it is preferred that the fuel contains both an oil fuel and alcohol. The oil fuel may be petroleum such as heating oil or gasoline, animal oil, plant oil, or the like. A wide variety of alcohol, such as methyl alcohol, methanol, propanol or butyl alcohol, may be utilized as the alcohol.

According to the fuel fluid, hydrogen or oxygen in a bubble state contained in the electrolyzed water is contained in the fuel fluid. The present inventor has found that the fuel fluid containing hydrogen or oxygen in a bubble state improves the combustion efficiency further, and has further found that, the smaller the bubbles of gas mixed are, the further the combustion efficiency is improved. In particular, the present inventor has found that the combustion efficiency is superior when the diameters of the bubbles are 10 µm or less. Incidentally, the lower limit of the diameters of the bubbles is a minimum value which can form a bubble, for example, 100 nm or more. In particular, the combustion efficiency is improved when hydrogen is contained in the electrolyzed water.

### 4. Mist Forming Section

It is preferred that the following cyclone-system spray apparatus is utilized as the mist forming section according to the above embodiments.

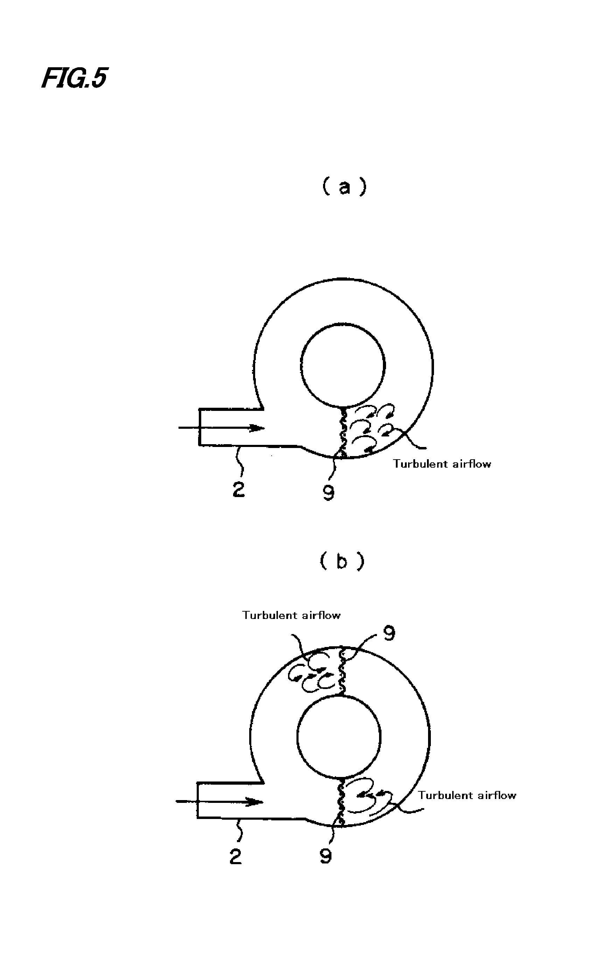

FIGS. 5A and 5B are conceptual diagrams of a main part of a cyclone-system spray apparatus, where a dotted arrow indicates airflow. The reference numeral 1 denotes air sucking and delivering means adapted to suck air to be purified and blowing the air toward a cyclone, such as a blower, a fan or a pump. The reference numeral 2 denotes an introducing section positioned just before the air is introduced in the cyclone. A mist spraying section for gas-liquid contact 7 is provided in an upper portion of the introducing section 2. The mist spraying section for gas-liquid contact 7 is supplied with liquid through a pipe (not shown) so that mist of the liquid is sprayed from the mist spraying section for gas-liquid contact 7. The reference numeral 3 denotes a cyclone main body, and the cyclone main body 3 is mainly formed of an outer cylinder 4 and an inner cylinder 5. Floating substances are cause to attach to an inner wall of the outer cylinder by centrifugal force, and the inner cylinder also serves as a discharge section for discharging the air purified. A lower portion of the cyclone is configured as a liquid pool 10, into which the floating substances flows down as well as fine water droplets. The reference numeral 6 denotes a mist spraying section for gas-liquid contact provided in an upper portion of the cyclone, and the mist spraying section for gas-liquid contact 6 is also supplied with liquid through a pipe (not shown) so that mist of the liquid is also sprayed from the mist spraying section for gas-liquid contact 6.

FIGS. 5A and 5B illustrate a configuration in which the mist spraying sections for gas-liquid contact are provided in both the introducing section 2 positioned just before the air is introduced in the cyclone and the upper portion of the cyclone, but a configuration for disposing the mist spraying section for gas-liquid contact is not limited thereto, and such a configuration can be adopted that the mist spraying section for gas-liquid contact is provided either in the introducing section 2 positioned just before the air is introducing in the cyclone or in the upper portion of the cyclone. In the following explanation, only the configuration provided with two mist spraying sections for gas-liquid contact will be explained.

Incidentally, the liquid in the formed of mist sprayed from the mist spraying sections for gas-liquid contact 6 and 7 is not limited to water, but it may be alkaline liquid or acidic liquid. When contaminated air to be cleaned is acidic, the liquid sprayed from the mist spraying sections for gas-liquid contact 6 and 7 is alkaline, and when contaminated air to be cleaned is alkaline, the liquid sprayed from the mist spraying sections for gas-liquid contact 6 and 7 is acidic. The following explanation assumes that the liquid is water for ease of explanation.

The reference numeral 8 denotes a spiral fin, an inner periphery of which is fixed on the inner cylinder. A predetermined clearance is provided between an outer periphery of the spiral fin and an inner wall of the outer cylinder. The clearance is for causing the fine water droplets and floating substances to attach to the inner wall of the outer cylinder of the cyclone to flow down efficiently.

The principle of air purification of the cyclone-system air purification apparatus thus configured will be explained. First, the air sucking and delivering means 1 sucks air to be purified to blow the same toward the cyclone. The air blown is mixed with mist sprayed from the mist spraying section 7 for gas-liquid contact provided in an upper face of the introducing section 2 positioned just before the air is introduced in the cyclone. At this stage, an opportunity for floating substances in the air to come into contact with fine water droplets is provided. Since the air is introduced in the cyclone and mist is also sprayed from the mist spraying section 6 for gas-liquid contact provided in the upper portion of the cyclone, an opportunity for the floating substances to come into contact with the fine water droplets can be provided inside the cyclone.

Since the spiral fin 8 which is likely to induce a spiral descending air current is provided inside the cyclone, a shortcut air current other than the spirally descending air current is harder to occur than in a cyclone without a spiral fin. Since the shortcut air current does not occur, the fine water droplets are attached to the floating substances to increase particle sizes of the floating substances, so that the floating substances can rotate to obtain the centrifugal force enough to adhere to the inner wall face of the cyclone.

In this manner, since the introducing section to the cyclone and the upper portion of the cyclone serve as spaces for bringing floating substances into contact with fine water droplets, and the portion provided with the spiral fin in the cyclone serves as a space for floating substances and fine water droplets to receive centrifugal force, a process for capturing floating substances, which includes two stages, one stage that the floating substances are brought into contact with the fine water droplets to be united therewith and the other stage that the floating substances united with the fine water droplets then receive the centrifugal force to attach to the inner wall face of the cyclone, is divided into two respective stages so that the process is performed more efficiently.

In addition, the spirally descending air current can freely be controlled by adjusting the width of the spiral fin or a pitch of spiral. Therefore, without following the conventional design rule that the diameter of an outer cylinder of a cyclone must be twice that of an inner cylinder of the cyclone, it becomes possible to design the dimension of a cyclone freely by changing the width of the spiral fin or the pitch of spiral.

The floating substances and the fine water droplets caused to attach to the inner wall face of the outer cylinder of the cyclone by sufficient centrifugal force produced by the above configuration finally flow down on the inner wall face by gravity to accumulate in the liquid pool.

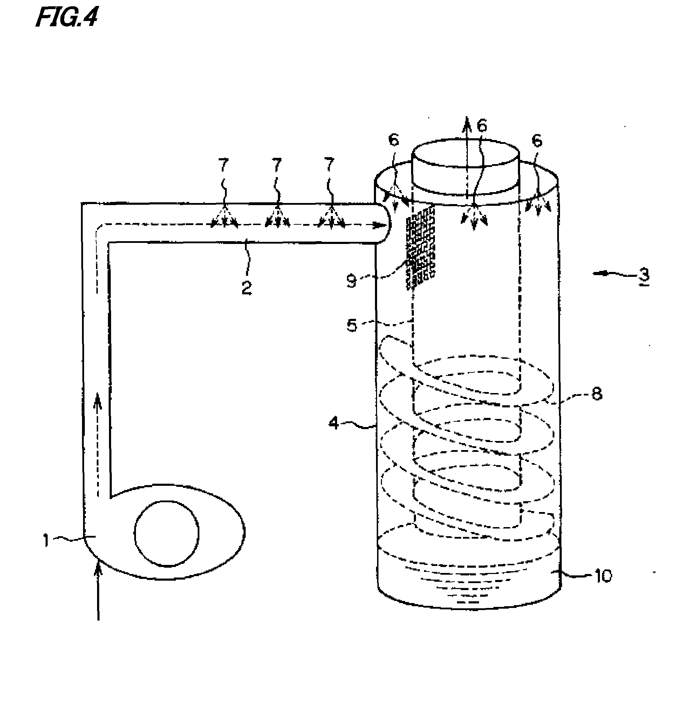

FIG. 4 is a diagram illustrating another embodiment of the cyclone-system air purification apparatus according to the present invention. A modification to the cyclone-system air purification apparatus according to FIGS. 5A and 5B lies in that means adapted to generate air turbulence for gas-liquid agitation 9 is provided near the introducing section 2 in the upper portion of the cyclone. FIG. 5A illustrates a cross-sectional diagram of an upper portion of the cyclone provided with the means adapted to generate air turbulence for gas-liquid agitation 9. As seen in FIG. 5A, the means adapted to generate air turbulence for gas-liquid agitation 9 may be provided at a portion in the upper portion of the cyclone on the circumference thereof, but, if needed, it may also be provided at each of plural portions in the upper portion of the cyclone on the circumference thereof, as shown in FIG. 5B.

For example, a net-like structure such as a porous material or a scrubber is used as the means adapted to generate air turbulence for gas-liquid agitation 9. In this embodiment, the air introduced in the upper portion of the cyclone hits against the means adapted to generate air turbulence for gas-liquid agitation 9 to become air turbulence, and the air turbulence makes it possible to further increase opportunities for the floating substances to come into contact with the fine water droplets as compared with that in a cyclone which does not include means adapted to generate air turbulence for gas-liquid agitation.

Incidentally, if there is no special limitation on a space, a multistage cyclone may be adopted. The multistage cyclone is provided with a plurality of cyclones, for example, in a two-stage cyclone, an introducing section of a cyclone at the first stage is the same as described above, but the air discharged from an inner cylinder of the cyclone at the first stage is introduced in an introducing section of a cyclone at the second stage, and the air discharged from an inner cylinder of the cyclone at the second stage is utilized as air finally purified.

When such a multistage cyclone is used, a mist spraying section for gas-liquid contact and means adapted to generate air turbulence for gas-liquid agitation are provided in a cyclone at a first stage, so that the cyclone at the first stage serves as a space for providing an opportunity for prompting contact between floating substances and fine water droplets sufficiently, and a mist spraying section for gas-liquid contact and means adapted to generate air turbulence for gas-liquid agitation are not provided in a cyclone at a second stage, so that the cyclone at the second stage serves as a space for the floating substances and the fine water droplets to only receive sufficient centrifugal force. By adopting such a configuration, in the process for capturing floating substances, which includes two stages, one stage that the floating substances are brought into contact with the fine water droplets to be united therewith and the other stage that the floating substances united with the fine water droplets then receive the centrifugal force to attach to the inner wall face of the cyclone, the stages can be implemented in the respective cyclones, so that it is made possible to capture the floating substances more efficiently.

### 5. Modified Embodiment

(1) A fluid compressing section for compressing a mixed fluid before the mixed fluid is supplied to the combustion section 270 may be provided. If the mixed fluid is compressed, for example, under 1 MPa or more in the fluid compressing section, when the mixed fluid is released through a nozzle, fine particles of the mixed fluid is sprayed. This mixed fluid is gaseous or subcritical. The upper limit of pressure when the mixed fluid is compressed in the fluid compressing section is, for example, 22 MPa.

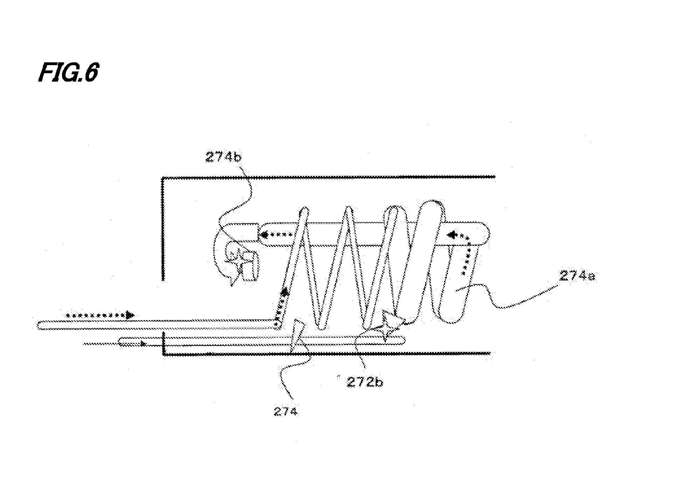

(2) The example of forming the mixed fluid into mist has been described above, however, the mixed fluid may be vaporized. An example of vaporizing the mixed fluid is illustrated in FIG. 6. A vaporizing method can be performed in the following manner. Fuel is supplied through an auxiliary fuel supply pipe 272a to ignite an auxiliary burner 272b. Therewith, fuel is supplied to a main fuel supply pipe 274a to vaporize the fuel by heat from the auxiliary burner 272b, and the fuel vaporized is supplied to a main burner 274b to ignite the main burner 274b. After the main burner 274b is ignited, the fuel in the main fuel supply pipe 274a is vaporized by heat from the main burner 274b, and fuel supply to the auxiliary fuel supply pipe 272a is stopped to turn the auxiliary burner 274b off. Incidentally, it is preferred that the main fuel supply pipe 274a extends through a place where flame of the main burner is generated and returns to the main burner 274b. Incidentally, whether or not the main burner 276 has been ignited may be detected by a sensor (for example, an optical sensor) or the like. The mixed fuel in the form of liquid may be present in a narrow pipe of the main fuel supply pipe 274a in FIG. 6 to be vaporized in a thick pipe thereof. This makes it possible to vaporize the mixed fluid without the need to provide a vaporizing section additionally.

### 6. Electrolysis Apparatus

### (1) Configuration of Electrolysis Apparatus

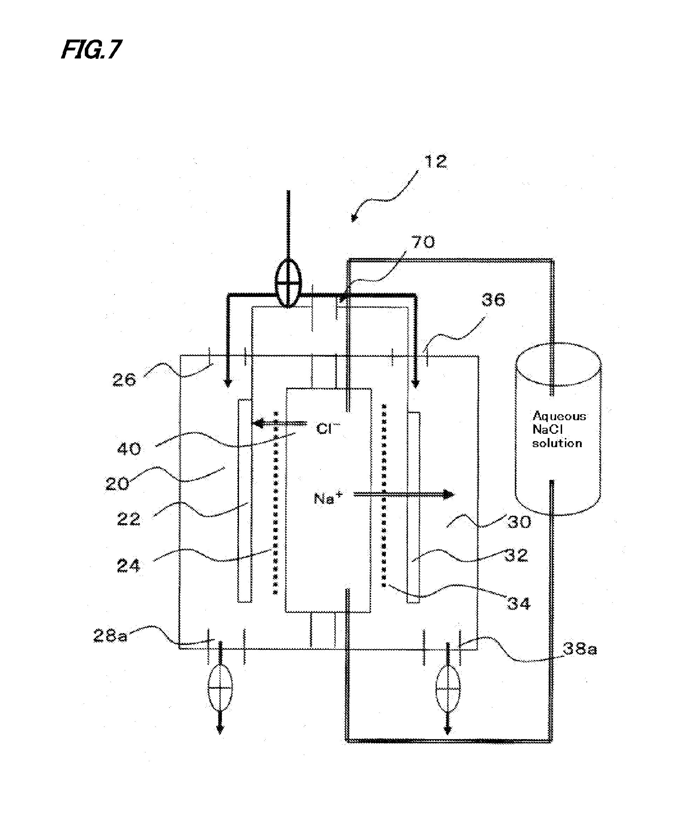

FIG. 7 is an illustrative diagram of a three-chamber electrolysis apparatus.

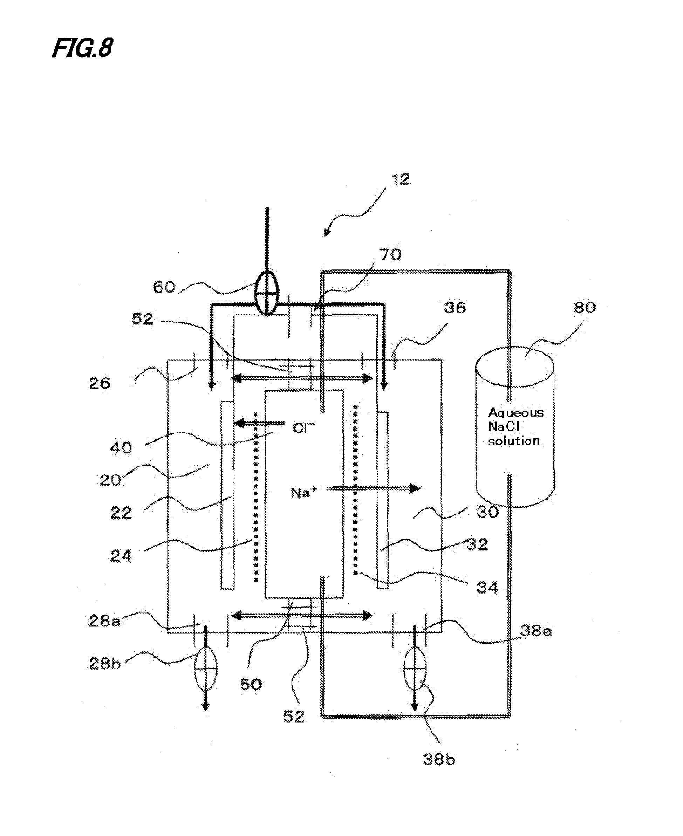

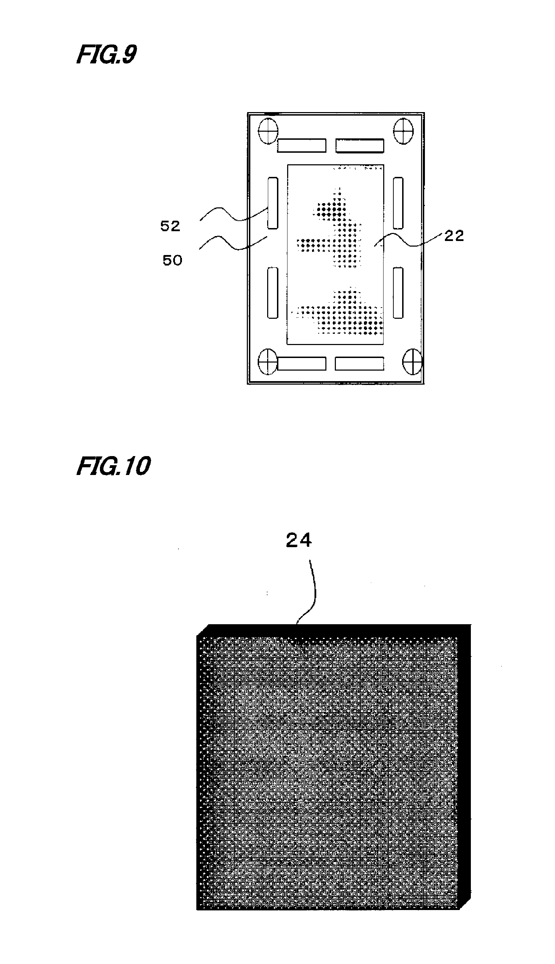

An electrolysis apparatus 12 includes an anode chamber 320, a cathode chamber 330, and a middle chamber 340. The middle chamber 340 is provided between the anode chamber 320 and the cathode chamber 330. Incidentally, as shown in FIGS. 8 and 9, communication holes 52 may be provided in a partitioning wall 50 that separates the anode chamber 20 and the cathode chamber 30 from each other. The communication holes 52 may be provided around the middle chamber 40. The communication holes 52 enables water to move bidirectionally between the anode chamber 20 and the cathode chamber 30.

An aqueous electrolytic solution is filled in the middle chamber 340. The aqueous electrolytic solution supplied to the middle chamber 340 supplies cations (for example, sodium ions) to the cathode chamber 330 and supplies anions (for example, chloride ions) to the anode chamber 320. The aqueous solution that has passed through the middle chamber 340 may be returned to a supply source 380 for the aqueous electrolytic solution to reuse and cycle the aqueous electrolytic solution, or an electrolyte may be added in the middle chamber 340 by an amount that has been consumed. The aqueous electrolytic solution may be, for example, an aqueous chloride salt solution (an aqueous sodium chloride solution or an aqueous potassium chloride solution.) The concentration of the aqueous electrolytic solution may be, for example, the saturating concentration of an electrolyte.

The middle chamber 340 and the anode chamber 320 are separated from each other by a first partitioning membrane 324 made of an anion exchange membrane. Since the first partitioning membrane 324 is made of the anion exchange membrane, cations in the middle chamber 340 do not pass through the first partitioning membrane 324, but only anions therein selectively pass through the first partitioning membrane 324. The anion exchange membrane applied as the first partitioning membrane 324 may be a known one.

The middle chamber 340 and the cathode chamber 330 are separated from each other by a second partitioning membrane 334 made of a cation exchange membrane. Since the second partitioning membrane 334 is made of the cation exchange membrane, anions in the middle chamber 340 do not pass through the second partitioning membrane 334, but only cations therein selectively pass through the second partitioning membrane 334. The cation exchange membrane applied as the second partitioning membrane 334 may be a known one.

A cathode 332 is connected to the negative side of a DC power supply 370, and an anode 322 is connected to the positive side of the DC power supply 370. The DC power supply 370 is configured to allow its voltage or current to be arbitrarily set. The DC power supply 370 may be the one whose voltage is arbitrarily selectable from about 5 V to 20 V and whose current is arbitrarily selectable from 3 A to 26 A. The anode 22 and the cathode 32 may be mesh-shaped electrodes, or may be electrodes where holes with a size of, for example, about 1.5 mm are made by punching process. Incidentally, the electrodes can be subjected to the punching process such that their areas removed by the punching process are, for example, 50% of the areas used as the electrodes. Known materials may be applied as materials for the electrodes.

The sizes of the anode 22 and the cathode 32 may be asymmetrical, that is, the electrode areas of the anode 22 and the cathode 32 may be made different from each other. Thereby, the amount of electrolysis at the anode 22 and the amount thereof at the cathode 32 can be changed. In addition, by making the electrode areas of the anode electrode and the cathode electrode different from each other, the acidity of electrolyzed water mixed can arbitrarily be adjusted. That is, when the electrode area of the anode 22 is larger than that of the cathode 32, the amount of generation of acidic electrolyzed water is larger than that of alkaline electrolyzed water, therefore the acidity of the electrolyzed water can be increased. On the other hand, by making the electrode area of the cathode 32 larger than that of the anode 22, the amount of generation of alkaline electrolyzed water is made larger than that of acidic electrolyzed water, so that the alkalinity of the electrolyzed water can be increased.

The electrolysis apparatus 12 is provided with a first water supply port 326 for supplying water to the anode chamber 320, and a second water supply port 336 for supplying water to the cathode chamber 330. A single flow path is branched to connect to the first water supply port 26 and the second water supply port 36. A distribution ratio adjusting valve 60 for adjusting the amounts of water distributed to the anode chamber 20 and the cathode chamber 30 is provided at the branching point of the flow path. The distribution ratio adjusting valve 60 may have a supply amount adjusting function of adjusting the amount of water supplied to the electrolysis apparatus 12.

The electrolysis apparatus 12 is provided with a first expelling opening 28a for discharging liquid in the anode chamber 320, and a second expelling opening 338a for discharging liquid in the cathode chamber 330. Further, the electrolysis apparatus 12 has a first expelling valve 28b for adjusting the amount of liquid discharged from the first expelling opening 28a, and a second expelling valve 28b for adjusting the amount of liquid discharged from the second expelling opening 28a.

It is preferred that such an electrolysis apparatus as described above is applied to the present invention. Though electrolyzed water produced in the anode chamber may be used or electrolyzed water produced in the cathode chamber may be used in this case, the electrolyzed water produced in the cathode chamber is more effective.

It is preferred that the first expelling opening 28a is provided at a lower portion of the anode chamber 20, and the first water supply port 26 is provided at an upper portion of the anode chamber 20. Thereby, the water supplied from the first water supply port 26 is caused to flow downward. Therefore, bubbles made of gas (chlorine in the case in which the aqueous electrolytic solution is sodium chloride or potassium chloride) generated at the anode 22 is pushed by the water to become hard to move up, by a corresponding amount, a time for gas-liquid contact between the gas (chlorine) and the water is extended, so that a reaction into hypochlorous acid can be caused more reliably.

It is preferred that the anode chamber 20 is vertically long. Specifically, it is preferred that the height of anode chamber 20 is larger than the width of the anode chamber 20 in a direction orthogonal to the anode 22. The ratio of the height of the anode chamber to the width of the anode chamber (height/width) may be, for example, 1.5 or more, preferably between 1.5 and 5.0. Such a vertically-long anode chamber 20 can extend the time for the gas (chlorine) generated therein to be in contact with the water, so that the reaction between the chlorine and the water can reliably take place. It is preferred that the same design is applied to the cathode 30.

### (2) Operation

Next, the operation of the electrolysis apparatus 12 will be explained.

First, the distribution ratio adjusting valve 60 is adjusted and water is supplied to the anode chamber 20 and the cathode chamber 30. The amount of the water is set, for example, in a range from 0.5 to 1.5 l/min.

While the water is supplied, a voltage is applied to between the anode 22 and the cathode 32 to perform electrolysis. For example, the voltage at the electrolysis is set in a range from 5 to 10 V, and the current thereof is set in a range from 3 to 10 A. In particular, scale buildup hardly occurs at 1500 C, preferably, 2000 C per liter of the aqueous solution supplied to the cathode chamber 30. When the voltage is applied to between the anode 22 and the cathode 32, the cations (for example, sodium ions in the case of the electrolyte being sodium chloride) in the middle chamber 40 pass through the second partitioning membrane 34 to move to the cathode chamber 30, while the anions (for example, chloride ions in the case of the electrolyte being sodium chloride) in the middle chamber 40 pass through the first partitioning membrane 24 to move to the anode chamber 20.

In the anode chamber 20, the chloride ions cause the following reaction at the anode 22 to generate chlorine:

2Cl⁻ → Cl₂ + 2e⁻

The chlorine further reacts with water to generate hypochlorous acid:

Cl₂ + H₂O → HClO + HCl

On the other hand, in the cathode chamber 30, the following reaction occurs at the cathode chamber 30:

H₂O + 2e⁻ → 1 / 2H₂ + OH⁻

During this electrolysis, acidic electrolyzed water that is produced in the anode chamber 20 moves to the cathode chamber 30 through the communication holes 52 provided in the partitioning wall 50 that separates the anode chamber 20 and the cathode chamber 30 from each other, alkaline electrolyzed water that is produced in the cathode chamber 30 moves to the anode chamber 20. Thereby, the acidic water produced in the anode chamber 20 and the alkaline electrolyzed water produced in the cathode chamber 30 are mixed with each other. In addition, the acidic water that is produced in the anode chamber 20 moving to the cathode chamber 30 can prevent the buildup of scale generated at the cathode 32.

In addition, during this electrolysis, the first expelling valve 28b and the second expelling valve 38b are adjusted to control the amounts of the electrolyzed water discharged from the anode chamber 20 and the cathode chamber 30.

By mixing the electrolyzed water discharged from the first expelling opening 28a and the electrolyzed water discharged from the second expelling opening 38a with each other, electrolyzed water that contains weakly alkaline, neutral, or weakly acidic hypochlorous acid according to this embodiment is produced.

Incidentally, the first expelling valve 28b or the second expelling valve 38b may completely be closed to discharge the electrolyzed water from only the first expelling opening 28a or the second expelling opening 28b. In this case, the mixed water is produced within the anode chamber 20 or the cathode chamber 30.

### (3) Effects of the Operation

According to this embodiment, the following effects can be obtained.

(a) Typically the cations supplied from the middle chamber 40 adhere to the cathode 32 in the cathode chamber 20, causing scale. However, the present inventor has found that the scale buildup on the cathode 32 is prevented in the electrolysis apparatus 10 according to this embodiment by introducing the acidic water produced within the anode chamber 20 in the cathode chamber 30 in a mixing manner. Since the scale buildup on the cathode 32 is prevented as described above, it is possible to eliminate or reduce a process for removing the scale buildup on the cathode 32 (reverse cleaning), enabling continuous operation.

Additionally, opening only the second expelling valve 38b to discharge the electrolyzed water from only the second expelling opening 38a of the cathode chamber 30 enables the acidic water produced in the anode chamber 20 to flow into the cathode chamber 30 side to produce alkaline electrolyzed water that contains a high concentration of hypochlorous acid, further preventing scale buildup on the cathode 32.

(b) Conventionally, there has been no conception of mixing the electrolyzed water produced in the anode chamber 20 and the electrolyzed water produced in the cathode chamber 30 with each other. However, the present inventor has found that the electrolyzed water produced in the anode chamber 20 and the electrolyzed water produced in the cathode chamber 30 can be mixed with each other to cause the mixed water to exhibit weak alkalinity, neutrality, or weak acidity. Furthermore, conventionally, only the electrolyzed water from one side is used and the electrolyzed water from the other side is discarded, but, since the electrolyzed water from both sides can be used by mixing them with each other, the water resource can effectively be used.

(c) The distribution ratio adjusting valve 60 can be adjusted to adjust the amount of electric current that flows to the water per unit amount of water that flows to the cathode 32. That is, if the amount of electric current is kept constant, reducing the amount of water increases the amount of electric current that flows to the water per unit amount of water. The larger the amount of electric current per unit amount of water that flows to the cathode 32 is, the less the scale builds up on the cathode 32. Therefore, since the amount of water supplied to the cathode chamber 30 is reduced, the scale buildup on the cathode 32 can be reduced more reliably.

(d) Since the first and the second water supply ports 26 and 36 are provided in the upper portions of the anode chamber 20 and the cathode chamber 30 and the first and the second expelling openings 28a and 28b are provided in the lower portions of the anode chamber 20 and the cathode chamber 30 to cause the water to flow downward, the chlorine that is generated at the anode 22 is hard to move upward, so that the time for the chlorine to be in contact with the water can be extended. Therefore, the reaction into hypochlorous acid can be realized more reliably.

(e) Normally it may be thought that, when the amount of distribution to the anode chamber 20 is small, the concentration of hypochlorous acid is largely reduced by mixing the electrolyzed water produced in the anode chamber 20 and the electrolyzed water produced in the cathode chamber 30 with each other. However, the present inventor has found that, in the electrolyzed water obtained from this embodiment, the concentration of hypochlorous acid (effective chlorine concentration) is not largely reduced. Therefore, in this embodiment, since the electrolyzed water obtained contains a high concentration of hypochlorous acid, bactericidal power is not reduced.

Incidentally, it is generally known that hypochlorous acid is contained in the acidic electrolyzed water that is produced on the anode side, however, in the case of producing hypochlorous acid water adjusted so that the pH value is slightly acidic, neutral, or slightly alkaline, it is thought that the hypochlorous acid water is produced by adding hydrochloric acid to sodium hypochlorite (soda) industrially produced to adjust the pH value, or that it is produced by mixing alkaline electrolyzed water and acidic electrolyzed water including sodium chloride that is produced according to the method shown in the above literature 1 with each other in an appropriate amount, but in both cases adjusting the pH value alone is not performed without any substantial change in effective chlorine concentration.

(f) In this embodiment, by changing a combination of a magnitude relationship between the amount of water supplied to the anode chamber 20 and the amount of water supplied to the cathode chamber 30 and a magnitude relationship between the degree of opening/closing (degree of throttling) of the first expelling valve 28b and that of the second expelling valve 38b, the pH value can variously be adjusted in the range from weak acidity to weak alkalinity, as shown in Table 1.

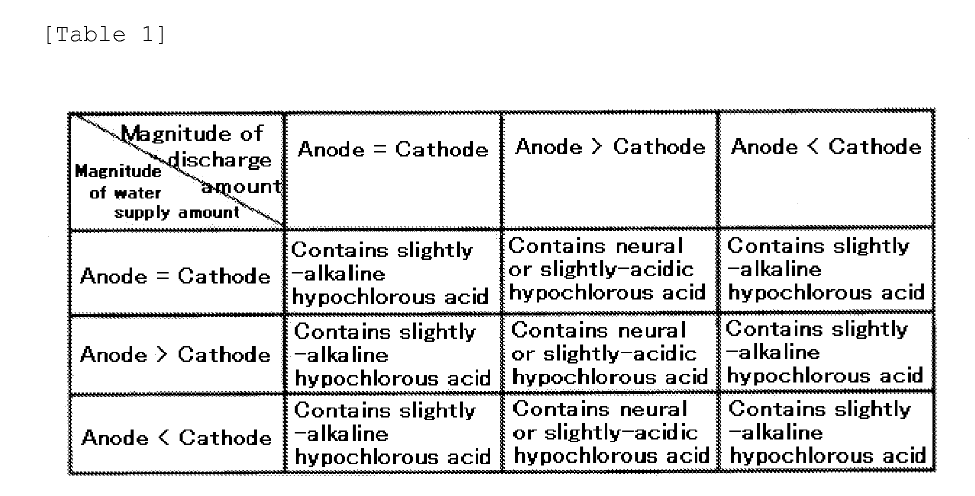

Incidentally, since the mixing ratio between the electrolyzed water produced on the anode chamber 20 and the electrolyzed water produced in the cathode chamber 30 is reduced by opening the first expelling valve 28b to the same degree as the second expelling valve 38b, the mixing ratio can be adjusted in particular by the first and second expelling valves 28b and 38b.

(g) Conventionally only one electrolyzed water is used while the other is discarded, however, this method makes it possible to use the valuable water resource without discarding any.

(h) Conventionally, sodium hypochlorite cannot be produced by a three-chamber electrolysis apparatus. That is, since sodium ions do not move to the anode chamber and hypochlorous acid does not move to the cathode chamber, the sodium ions and the hypochlorous acid do not react with each other, and thus sodium hypochlorite is not produced. However, since this embodiment is provided with the communication holes 42, the hypochlorous acid and the sodium ions react with each other to generate sodium hypochlorite, so that mixed water of sodium hypochlorite and hypochlorous acid can be produced. Thereby, mixed electrolyzed water having a cleaning effect and a bactericidal effect can be obtained. Incidentally, sodium hypochlorite is designated as a food additive by the ministry of Health, Labor and Welfare at the time of filing this application.

As a comparative example, using a two-chamber electrolysis apparatus to produce sodium hypochlorite can be considered. The two-chamber electrolysis apparatus is an apparatus for electrolyzing water in which an electrolyte is dissolved, in which an anode chamber and a cathode chamber are separated from each other by a partitioning membrane. In the case of producing sodium hypochlorite by the two-chamber electrolysis apparatus, since sodium chloride is dissolved in water, there is the restriction that the concentration of sodium chloride becomes high.

Additionally, a method of causing chloride ions to react in an alkaline environment by electrolysis to produce sodium hypochlorite can be considered, however, in this case, there is the problem that trihalomethane is generated. According to this embodiment, however, since hypochlorious acid is produced in the anode chamber in an acidic environment and the hypochlorous acid is caused to react with sodium ions to produce hypochlorous acid, trihalmethane is not generated.

(i) There is the advantage that the present invention does not have such an environmental load as environmental pollution, since it complies with effluent standards or the like without performing effluent treatment by producing near-neutral electrolyzed water.

(j) The electrolytic hypochlorous acid also has such a feature that it is neutralized easily through contact with an organic substance.

(k) When electrolysis is performed in a state in which the anode chamber and the cathode chamber do not communicate with each other, electrolyzed water discharged from the cathode chamber includes a precipitate (calcium carbonate). However, the present inventor has found that the precipitate is prevented from being generated by performing electrolysis with the anode chamber 20 and the cathode chamber 30 communicated with each other, since the electrolyzed water discharged from the cathode chamber 30 also contains electrolyzed water that has flowed in the cathode chamber 30 from the anode chamber 20. Thereby, for example, the following effect is obtained.

Such a case can be thought that the electrolyzed water discharged from the cathode chamber is stored in a tank to be used when needed. In this case, if a precipitate is contained in the electrolyzed water, the precipitate builds up on the inner wall of the tank, causing the tank to be frequently cleaned. In addition, the precipitate accumulates in a water intake, preventing water flow, which may cause a malfunction. However, with the electrolyzed water that does not contain a precipitate, the precipitate does not adhere to the inner wall of the tank, making it possible to reduce the frequency of cleaning, and the precipitate does not accumulate in the water intake, making it possible to secure reliable water flow.

### (4) Modified Embodiment

### (a) First Modified Embodiment

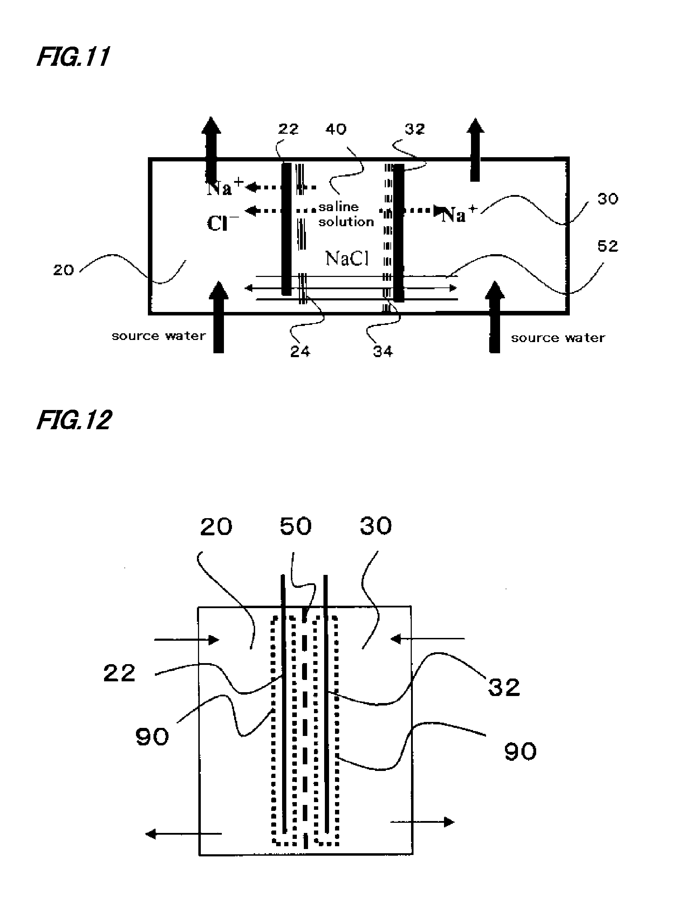

As shown in FIGS. 10 and 11, the first partitioning membrane 24 made of an anion exchange membrane may be provided with pores. The diameter of the pore may be, for example, in a range from 30 to 80 µm. In this case, the first partitioning membrane 24 may be made of a nonwoven fabric.

The first modified embodiment facilitates movement of sodium ions or the like contained in an aqueous electrolytic solution into the anode chamber 20, making it easier to produce mixed water of sodium hypochlorite and hypochlorous acid.

### (b) Second Modified Embodiment

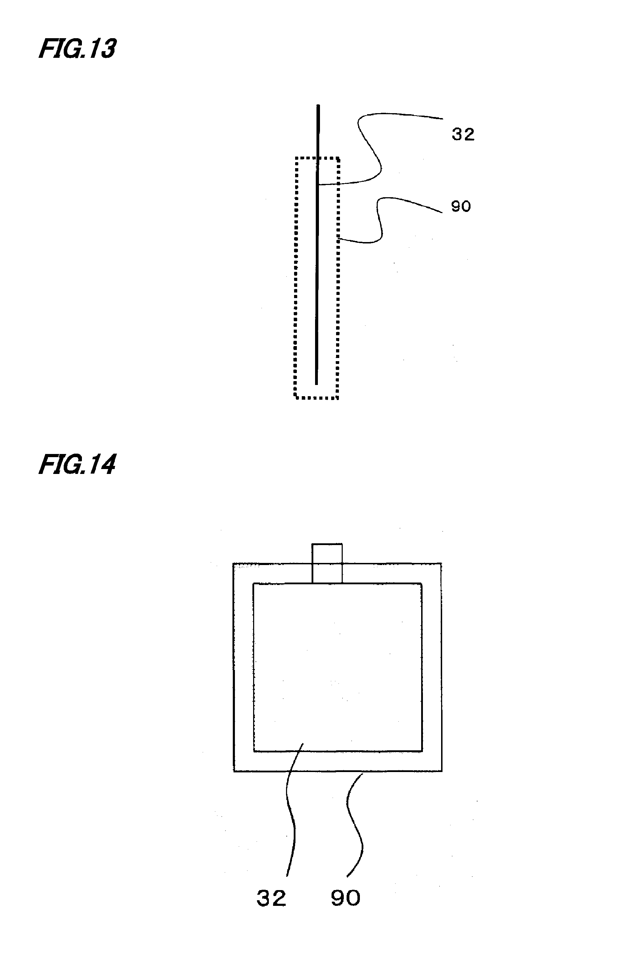

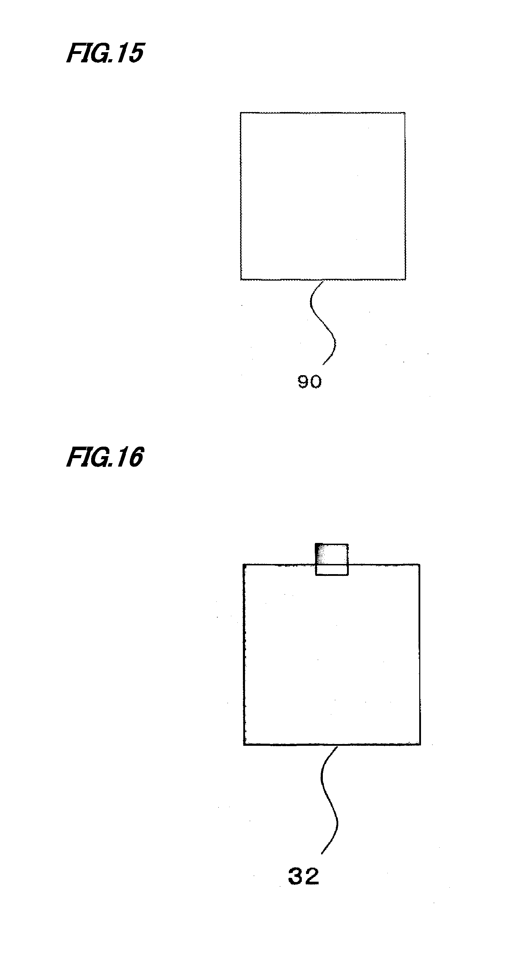

As shown in FIGS. 12 to 16, the cathode 32 may be covered with a sheet member 90 that is permeable to water. As the sheet member 90, a non-woven fabric or a multilayer mesh sheet, for example, may be used. The following benefits are achieved by covering the cathode 32 with a sheet member in this manner.

Covering the cathode 32 with the sheet member 90 causes the electrolyzed water to be retained near the cathode 32. This increases the amount of charge relative to the water that is retained near the cathode 32. By an increased amount of charge relative to the water, scale buildup due to the cations is further reduced. As a result, not only is continuous operation facilitated, but cleaning the cathode 32 is also eliminated or performed less frequently, so that an electrolysis apparatus that is more advantageous in an industrial application can be realized. In addition, since the sheet member can prevents scale from growing on the cathode 32 to damage the ion exchange membrane 54, the sheet member can also serve to protect the ion exchange membrane. Incidentally, the anode 22 may be covered with a sheet member as well as the cathode 32.

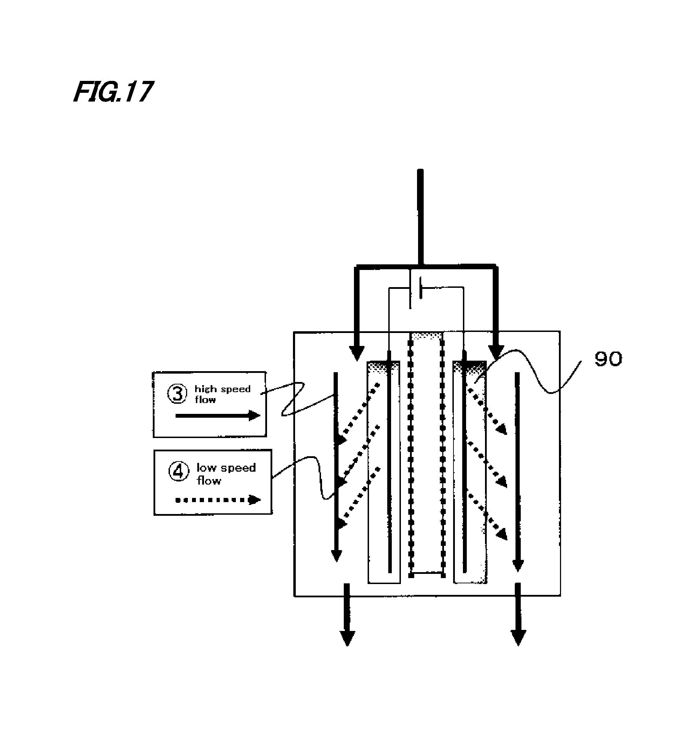

The effects of operation will be explained more specifically with reference to FIG. 17. Source water that is supplied to an electrolysis tank flows over the surface of an electrode plate at high speed. At this time, scale builds up on the surface of the electrode especially on the cathode side, however, a mesh sheet covering the surface of the electrode plate causes the source water to split into two flows, namely, a high-speed flow and a low-speed flow. A sufficient current can be applied to the low-speed flow on the surface of the electrode covered with the mesh sheet. This simple method of applying a large current to the electrode plate on the cathode side covered with the simple net sheet member prevents scale from building up on the surface of the electrode plate.

### (c) Third Modified Embodiment

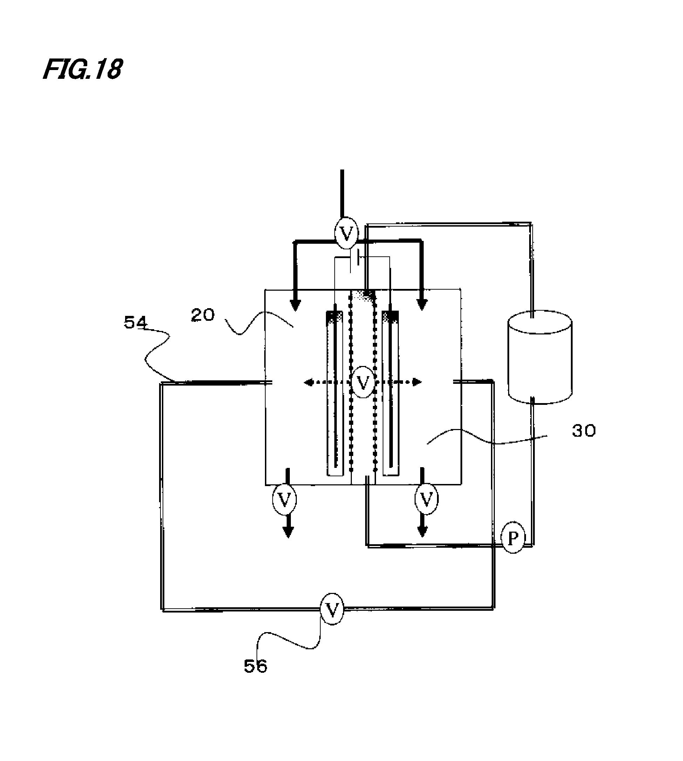

In the above embodiment, the anode chamber 20 and the cathode chamber 30 are communicated with each other by the communication holes 52 in the partitioning wall 50, however, as shown in FIG. 18, they may be communicated with each other by a communicating passage 54 provided additionally. The communicating passage 54 has the advantage of making it easy to figure out the amount of water moving between the anode chamber 20 and the cathode chamber 30. An opening/closing-degree adjusting valve 56 may be provided in the communicating passage 54. The opening/closing-degree adjusting valve 56 makes it possible to easily adjust the amount of water moving between the anode chamber 20 and the cathode chamber 30.

### (d) Fourth Modified Embodiment

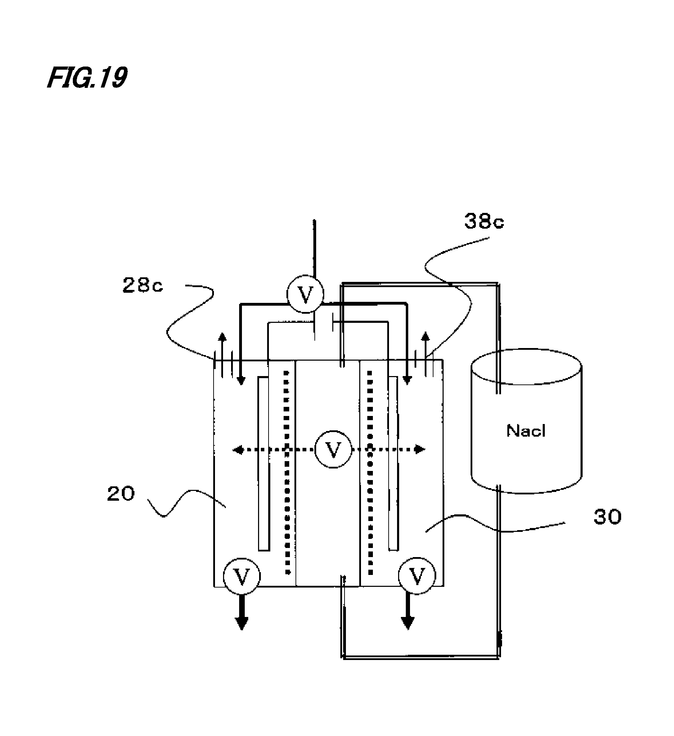

As shown in FIG. 19, a first gas-vent port 28c for venting gas generated in the anode chamber 20 may be provided. Since this makes it possible to vent the gas generated in the anode chamber 20, destabilization of flow rate due to the gas can be prevented. A second gas-vent port 38c for venting gas generated in the cathode chamber 30 may also be provided. Since this makes it possible to vent the gas generated in the cathode chamber 30, destabilization of flow rate due to the gas can be prevented. The first and the second gas-vent ports 28c and 38c may be plugged if needed.

### (e) Fifth Modified Example

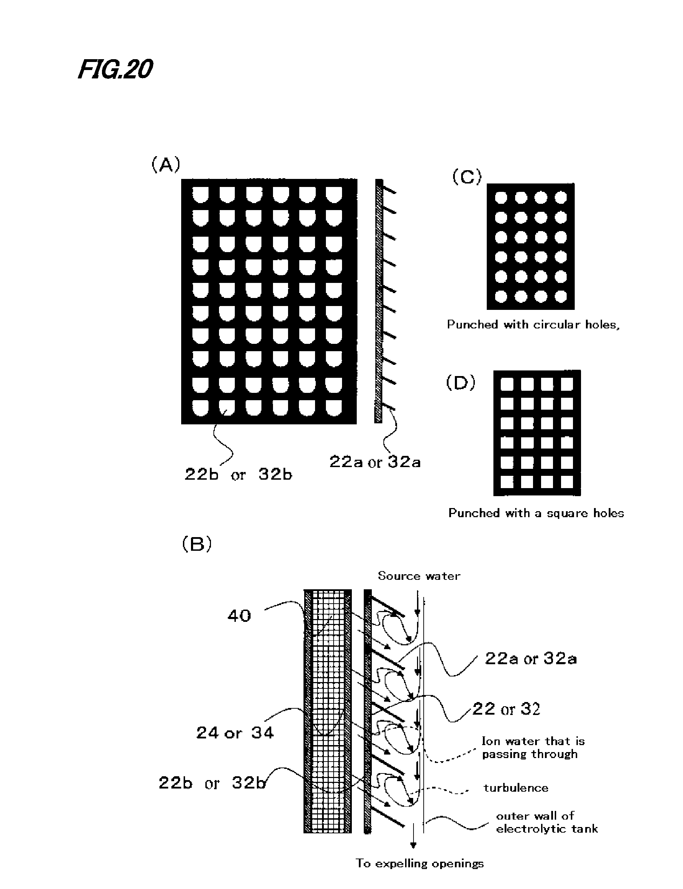

The anode 22 may be an electrode having prong electrode portions 22a, as shown in FIG. 20. The cathode 32 may also be provided with prong electrode portions 32a. The prong electrode portions 22a and 32a are formed so as to extend from edges of holes 22b and 32b formed by punching. The prong electrode portions 22a and 32a can be formed by punching holes in the electrodes 22 and 32 such that they are not cut out but are left on. Conventionally, in a punched electrode, portions that are cut out by punching are discarded and the area of the remaining electrode portion is used, however, this method reduces the area used for electrolysis to about 50% of the area before punching to reduce by half the volume of water that comes in contact with the electrode surface, resulting in lowered electrolytic efficiency. However, by not cutting out the punched portion of the electrode but leaving it on, the whole electrode before punching can be left (the whole area can be maintained), so that the electrolytic efficiency is not lowered. In addition, since wing portions that are not cut out by punching cause smooth water movement on both sides of the electrode, the electrolytic efficiency is also improved from this point of view. Further, it has been confirmed that bubbles are generated at corners of cut pieces on the roots of the wind portions more than on the flat portion of the electrode, and so that an active electrolytic reaction is caused. This may be because the water movement on both sides of the electrode 22 and 32 half-punched causes a turbulence, resulting in improvement in the electrolytic efficiency. That is, ion water that has moved to the respective electrode sides 22 and 32 from the middle chamber 40 moves to the electrolysis tanks outside the electrodes 22 and 32 through the punched communication holes 22b and 32b, on the other hand, the source water passing through the outside of the electrodes 22 and 32 causes a turbulence hitting against the prong electrode portions 22a and 32a, and the source water is mixed with the ion water coming from the middle chamber 40, finally coming into contact with the surfaces of the electrode plates as a turbulence, so that the electrolytic efficiency is achieved.

Incidentally, a known method may be applied as the punching method. The shapes of the punched holes may be circular or rectangular.

### (f) Sixth Modified Embodiment

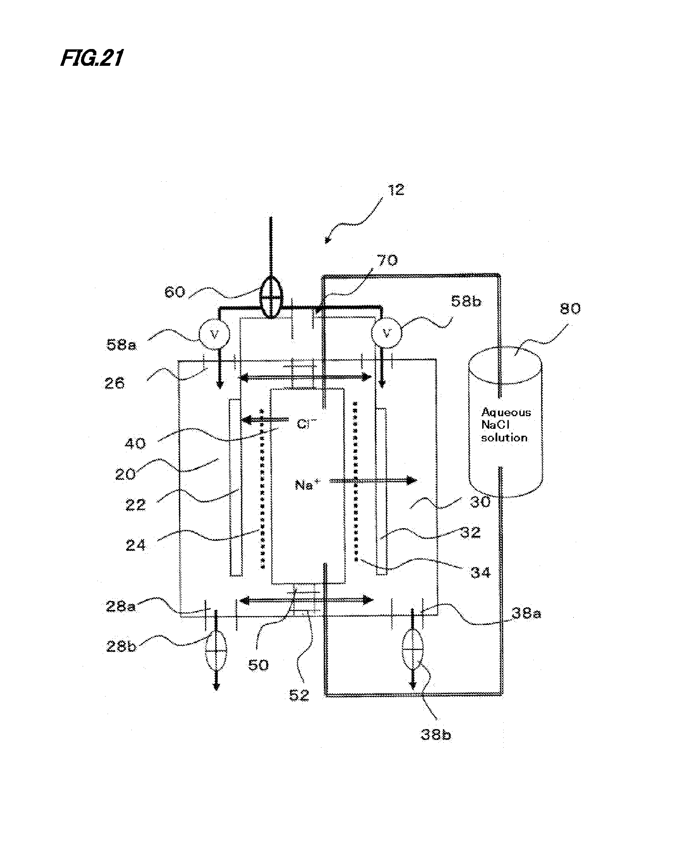

As shown in FIG. 21, a first opening/closing valve 58a for determining whether or not to supply water to the anode chamber may be provided. In an ordinary electrolysis apparatus, electrolysis cannot be performed without supplying water to both the anode chamber and the cathode chamber. However, according to this embodiment, since the anode chamber 20 and the cathode chamber 30 are communicated with each other, the water is supplied to the anode chamber 20 through the cathode chamber 30 even if the opening/closing valve 58a is closed, so that electrolysis can be performed by the way that cannot be employed by an ordinary electrolysis apparatus. For example, when the first opening/closing valve 58a is closed to discharge the electrolyzed water from only the anode chamber 20 side, electrolyzed water having strong acidity can be produced.

Similarly, a second opening/closing valve 58b for determining whether or not to supply water to the cathode chamber 30 may be provided. Even if the second opening/closing valve 58b is closed, as long as the first opening/closing valve 58a is opened, the water is supplied to the cathode chamber 30 through the anode chamber 20, so that electrolysis can be performed by the way that cannot be employed by an ordinary electrolysis apparatus. For example, when the second opening/closing valve 58b is closed to discharge the electrolyzed water from only the cathode chamber side, electrolyzed water having strong alkalinity can be produced.

### (g) Seventh Modified Embodiment

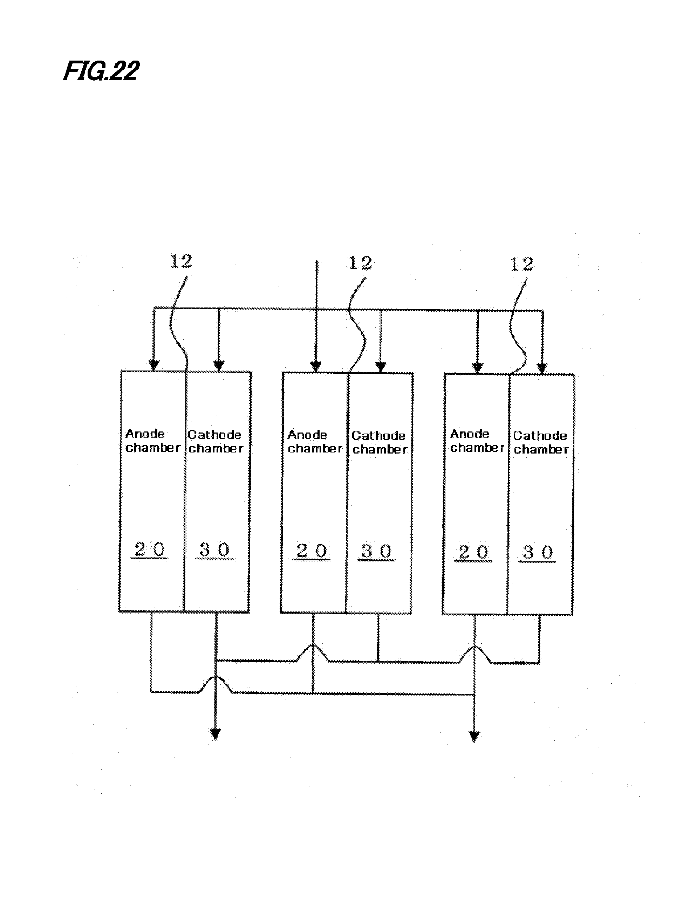

As shown in FIG. 22, a plurality of electrolysis apparatuses 10 may be connected in parallel with each other. That is, such a structure may be employed that a plurality of anode chambers 20 and a plurality of cathode chambers 30 are prepared, the electrolyzed water that has been discharged from the respective anode chambers 20 is discharged from a common outlet, and the electrolyzed water that has been discharged from the respective cathode chambers 30 is discharged from a common outlet. According to this modified embodiment, since the plurality of anode chambers are connected in parallel with each other, and the plurality of cathode chambers 30 are connected in parallel with each other, parallel processing of water electrolysis becomes possible, so that mass production of electrolyze water is facilitated.

### (H) Eighth Modified Embodiment

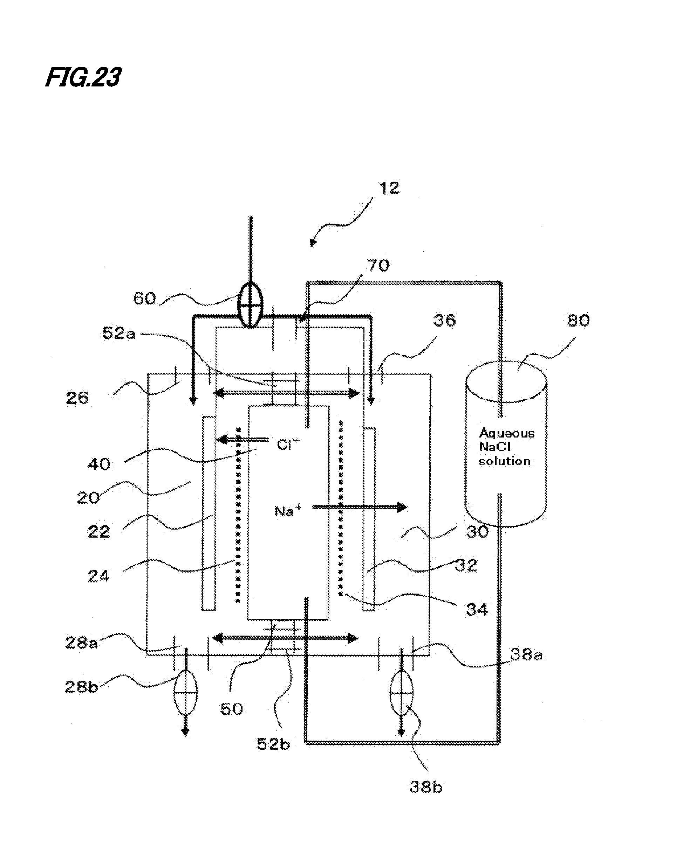

As shown in FIG. 23, a first communication hole 52a provided on the supply side and a second communication hole 52b provided on the discharge side may be included, the first communication hole 52a being smaller than the second communication hole 52b. The open area ratio of the first communication hole 52a to the second communication hole 52b is set, for example, in a range between 0.5 to 9.5 and 1.5 to 8.5.

When the acidic water produced in the anode chamber enters the cathode chamber through the communication holes, since the first communication hole 52a is small, secondary electrolysis of hypochlorous acid or the like contained in the acidic water can be prevented in the cathode chamber. That is, while secondary electrolysis of the acidic water is prevented as much as possible, the acidic water can be mixed with alkaline water and discharged. It is preferred that the first communication hole 52a is set so as to let the acidic water through by such an amount that a scale is prevented from building up on the cathode. It is experimentally confirmed that calcium carbonate is not produced in alkaline water in the cathode when the source water supplied to the cathode chamber is mixed with 10% or more of acidic water with a pH of around 3.0.

Calcium carbonate also causes such a problem, when alkaline water is used for cleaning or plant activation, that it builds up on the inside of a pipe or that it builds up on the shaft of a water pump to block the shaft thereof from rotating. However, according to this modified embodiment, the effect that such a precipitate made of calcium carbonate is not generated is obtained.

Further, since there is the second communication hole 52b, a predetermined amount of hypochlorous acid can be moved to the cathode side.

### (i) Ninth Modified Embodiment

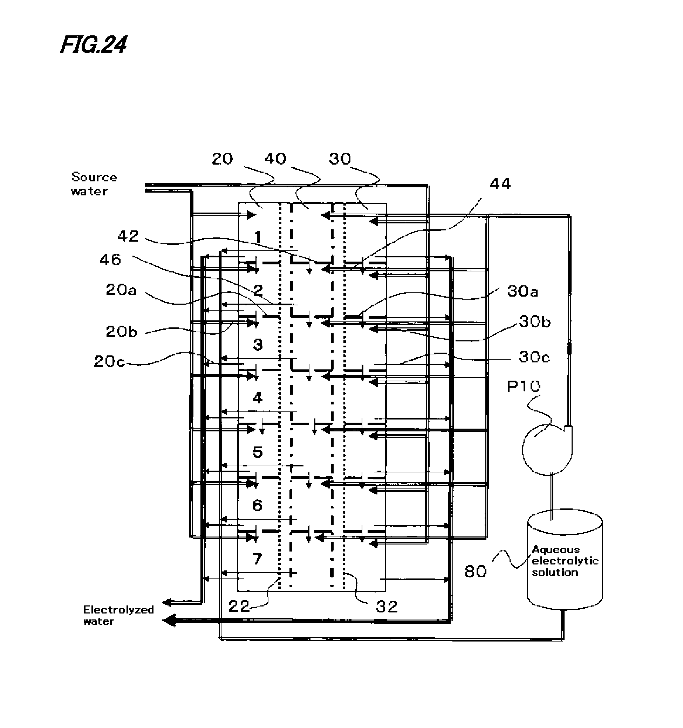

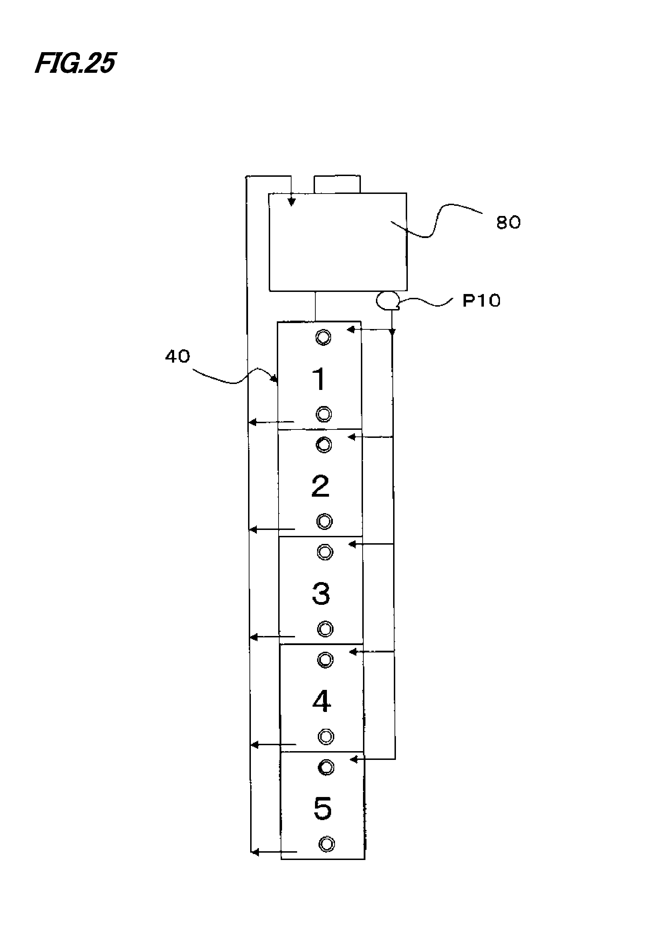

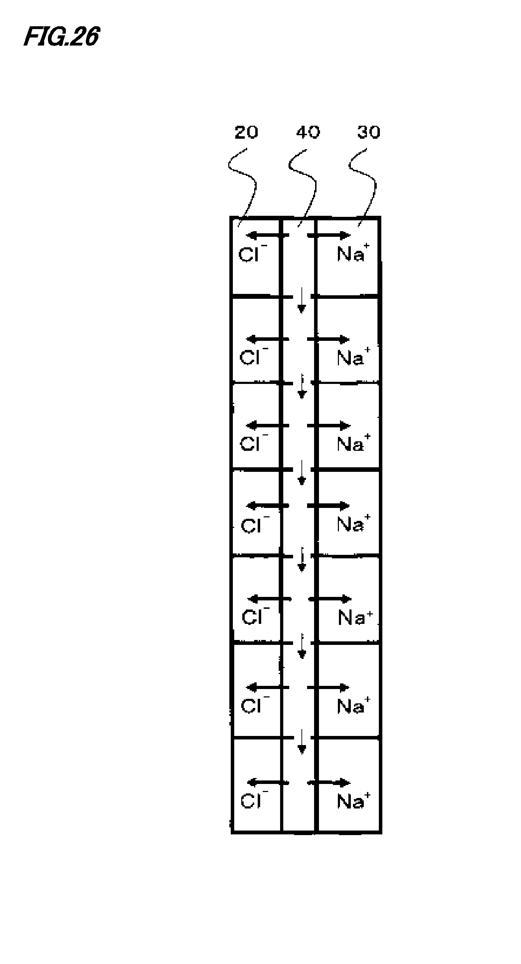

As shown in FIGS. 24 to 26, the middle chamber 40 may be divided into a plurality of compartments in a direction in which the anode 22 and the cathode 32 extend. The plurality of compartments of the middle chamber 40 can be separated from one another by partitions 42. Since the compartments are separated from one another by the partitions 42, the aqueous electrolytic solution can be retained, electrolytic ions can move more reliably, so that a movement and depletion phenomenon of the electrolytic ions can reliably be caused from the middle chamber 40 to the anode chamber 20 and the cathode chamber 30. Thereby, efficient electrolysis can be achieved. Each of the plurality of compartments of the middle chamber 40 may be communicated with an adjacent compartment. In this case, a supply portion 44 can be provided in each of the plurality of compartments. A discharge portion 46 of the aqueous electrolytic solution can also be provided in each of the plurality of compartments of the middle chamber 40. The supply portion 44 and the discharge portion 46 can be realized, for example, by connecting pipes on the side portions of the middle chamber 40. This modified embodiment may be modified in the following manner.

(i) The supply portion 44 may not supply the aqueous electrolytic solution but supply the electrolyte.

(ii) The compartments of the middle chamber 40 may completely be separated from one another by the partitions 42. In this case, the supply portion 44 that supplies the aqueous electrolytic solution to each compartment and the discharge portion 46 that discharges the aqueous electrolytic solution from each compartment are required.

(iv) The middle chamber 40 may be modified in the following manner. That is, a primary supply portion for the aqueous electrolytic solution may be provided at one end (one side in the direction which the anode 22 and the cathode 32 extend) of the middle chamber 40, and a primary discharge portion for the aqueous electrolytic solution may be provided at the other end (the other side in the direction in which the anode 22 and the cathode 32 extend) of the middle chamber 40. At least one secondary supply portion for supplying the aqueous electrolytic solution may be provided between the primary supply portion for the aqueous electrolytic solution and the primary discharge portion for the aqueous electrolytic solution.

In this case, the anode chamber 20 can be provided with a plurality of compartments corresponding to the compartments of the middle chamber 40. The compartments of the anode chamber 20 may be separated from one another by partitions 20a. In addition, each of the compartments of the anode chamber 20 may be communicated with an adjacent compartment or may not be communicated therewith. Furthermore, each of the compartments of the anode chamber 20 may be provided with a supply portion 20b and a discharge portion 20c for the source water. Incidentally, when each of the compartments of the anode chamber 20 is not communicated with an adjacent compartment, it is preferred that each of the compartments thereof is provided with the supply portion 20b and the discharge portion 20c. Since the compartments are separated from one another by the partitions 20a, the aqueous electrolytic solution can be retained, and electrolytic ions can move more reliably, so that efficient electrolysis can be achieved.

If the discharge portion of the anode chamber 20 is provided at only the last compartment, highly-concentrated electrolyzed water is produced, which damages the partitioning membrane easily, so that it is preferred that each of the compartments is provided with the discharge portion 20c.

The cathode chamber 30 can also be provided with a plurality of compartments corresponding to the compartments of the middle chamber 40. The compartments of the cathode chamber 30 may be separated from one another by partitions 30a. In addition, each of the compartments of the cathode chamber 30 may be communicated with an adjacent compartment or may not be communicated therewith. Furthermore, each of the compartments of the cathode chamber 30 may be provided with a supply portion 30b and a discharge portion 30c for the source water. Incidentally, when each of the compartments of the cathode chamber 30 is not communicated with an adjacent compartment, it is preferred that each of the compartments thereof is provided with the supply portion 30b and the discharge portion 30c. Since the compartments are separated from one another by the partitions 30a, the aqueous electrolytic solution can be retained, and electrolytic ions can move more reliably, so that efficient electrolysis can be achieved.

If the discharge portion of the cathode chamber 30 is provided at only the last compartment, highly-concentrated electrolyzed water is produced, which damages the partitioning membrane easily, so that it is preferred that each of the compartments is provided with the discharge portion 30c.

According to this modified embodiment, the following effects of operation can be achieved.

Conventionally, in a three-chamber electrolysis apparatus, mass production of electrolyzed water is not usually performed in a single electrolytic tank. The present inventor has found the following cause of the problem that electrolyzed water cannot be mass-produced in a single electrolytic tank. The distance between the anode and the cathode via the middle chamber is extremely important in terms of electric conduction. The shorter the distance between the anode and the cathode is, the higher the conductivity is, however, a certain space is required for existence of the middle chamber between both the electrodes. Therefore, while there is a limit to the flow rate of the electrolyte that flows in the middle chamber, electrolysis causes the ions to move from the middle chamber to the anode chamber and the cathode chamber, consuming the electrolyte partway through the middle chamber, so that Na⁺ or Cl⁻ that are necessary for electrolysis becomes insufficient. That is, the aqueous electrolytic solution usually flows in such a narrow space as a space of about 3 to 6 mm for the middle chamber between the anode and the cathode. Though a saturated saline solution conducts most efficiently as the aqueous electrolytic solution, Na⁺ and Cl⁻ of the aqueous electrolytic solution that flows in the narrow middle chamber move to both the electrodes through the ion exchange membranes, and the ion concentration in the middle chamber lowers due to consumption of the ions as the aqueous electrolytic solution passes through the electrolytic tank. Therefore, the difference in ion concentration between the vicinities of an inlet and an outlet of the aqueous electrolytic solution is increased in a single electrolytic tank.

A high voltage is required when the electrolyte ion concentration in the middle chamber falls to a certain concentration or less. However, electrolysis is necessarily performed with a certain low voltage in order to reduce consumed power and to prevent the electrodes or the membranes from being damaged. Then, in order to maintain a most-efficient voltage, structurally, there exists naturally an appropriate value for the electrolytic area. Consequently, the present inventor has recognized the cause of the problem that it might be impossible to solve the problem accompanying the mass production of electrolyzed water.

The modified embodiment has been made, focusing on the cause of the problem. That is, since the supply portion 44 for supply of the electrolyte or the aqueous electrolytic solution is provided partway through the middle chamber 40, the electrolyte consumed can be replenished. Therefore, the concentrations of the electrolyte in the respective compartments of the middle chamber 40 can be made even. Accordingly, the electrolytic efficiency can be prevented from becoming uneven among respective electrolysis portions, so that efficient and effective electrolysis can be achieved. In addition, since the concentration of the electrolyte can be equalized, the apparatus can be driven with a low voltage, so that damaging the electrodes or the ion exchange membranes can be suppressed.

### (5) Experimental Examples

### Experimental examples will be explained below.

(1) Experimental results in various aspects of the electrolysis apparatus will be shown.

Table 2 shows the experimental results of various aspects of the electrolysis apparatus in which the anode chamber and the cathode chamber are communicated with each other. An experiment was made on changes in the property of electrolyzed water due to differences in conditions of the supply portion, the communication hole, and the discharge portion in the electrolysis apparatus. Chloride test papers (10 to 50 ppm) (brand name: ADVANTEC, manufactured by Toyo Engineering Works) were used when the concentrations of hypochlorous acid were measured.

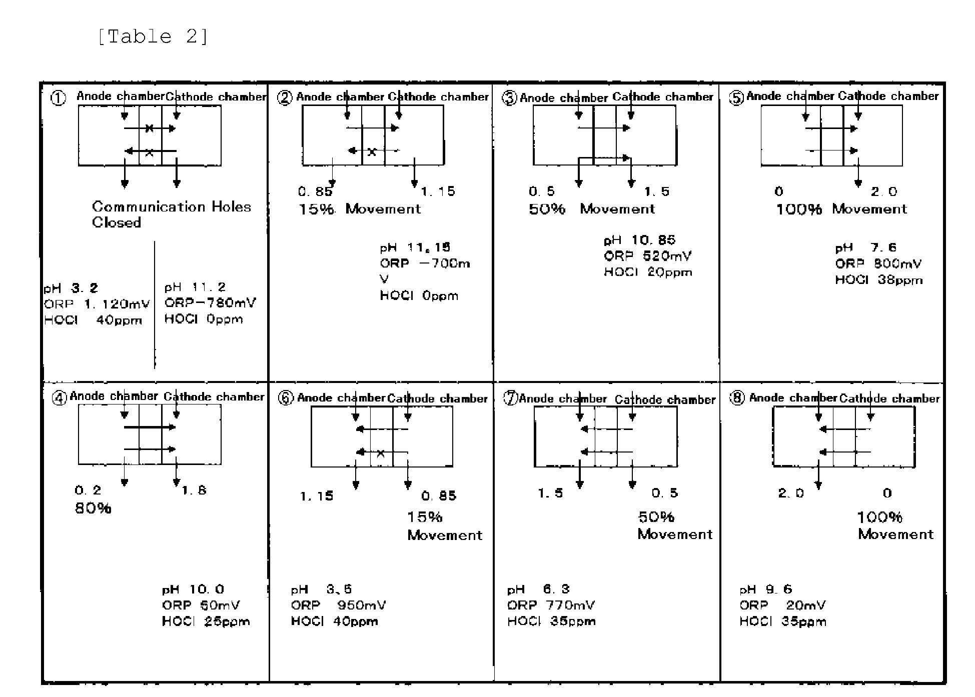

### (2) pH Adjustment

From Table 2, it was confirmed that, according to the electrolysis apparatus in which the anode chamber and the cathode chamber were communicated with each other, the electrolyzed water with a pH of 3 to 11 could be produced. Specific aspects of communication between the anode chamber and the cathode chamber and specific aspects of the supply portion and the discharge portion are shown in Table 1. As shown in Table 1, the pH of the electrolyzed water can freely be adjusted by adjusting the aspects of communication between the anode chamber and the cathode chamber and the aspects of the supply portion and the discharge portion.

It was confirmed that the pH, ORP, and concentration of hypochlorous acid of the electrolyzed water discharged from the anode chamber were adjustable at least in the range from 3.2 to 9.6, from 1120 mV to 20 mV, and from 40 ppm to 35 ppm, respectively.

It was confirmed that the pH, ORP, and concentration of hypochlorous acid of the electrolyzed water discharged from the cathode chamber were adjustable at least in the range from 7.6 to 11.2, from 800 mV to -780 mV, and from 0 ppm to 38 ppm, respectively.

### (3) Regarding Presence/Absence of Buildup of Scale to Cathode

Scale builds up on the cathode in nature. However, buildup of scale to the cathode could not be visually confirmed even after 50 hours of use of the electrolysis apparatus.

### (4) Regarding Floating Substances (Precipitate)

Water was electrolyzed with the anode chamber and the cathode chamber communicated with each other, and electrolyzed water was discharged from the cathode chamber. It was confirmed that floating substances (calcium oxide or the like) were not generated in the electrolyzed water.

### 7. Application Examples

### (1) Turbine Engine

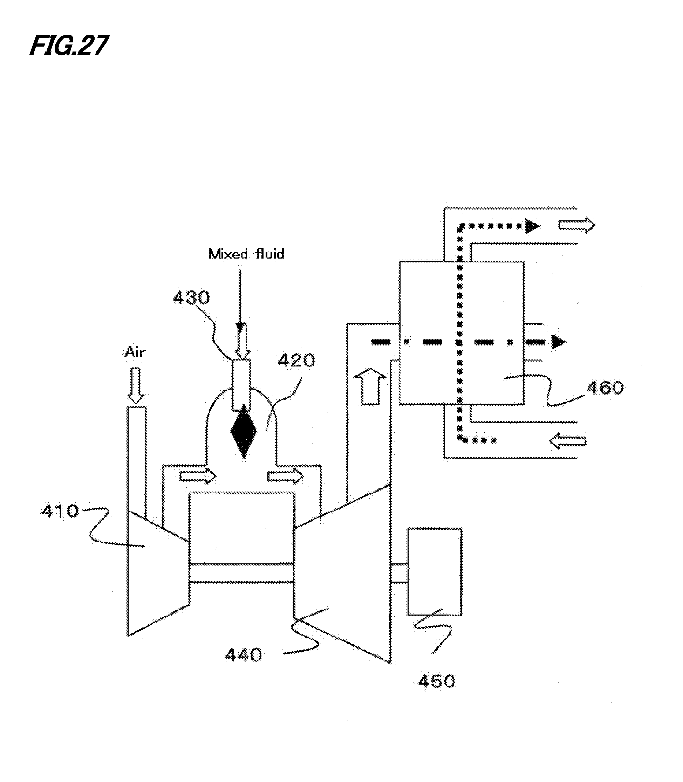

An application of a combustion system according to an embodiment to a turbine engine will be explained with reference to FIG. 27.

Air is compressed by a compressor 410, and the air compressed is supplied to a combustion chamber 420. A mixed fluid is combusted in the combustion chamber 420, and the air that has become high-temperature and high-pressure (including combustion gas) is supplied to a turbine 440 to rotate the turbine 440, so that electricity is generated through a generator 450. In addition, the air that has passed through the turbine 450 is supplied to a heat exchanger 460 to transfer its heat to such medium as water. A part of the electricity generated by the generator 450 can also be used to drive the compressor.

### (2) Diesel Engine

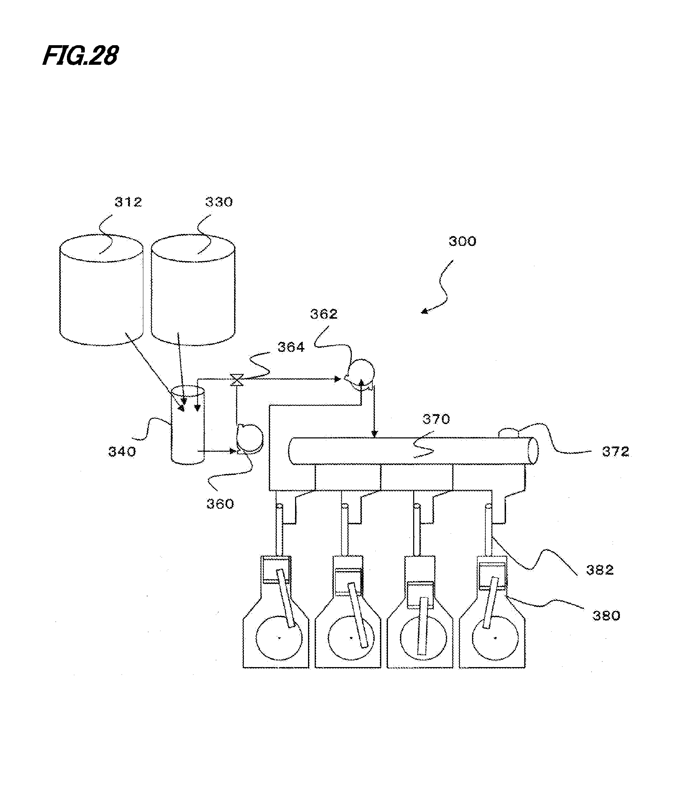

An application of a combustion system according to an embodiment to a diesel engine will be explained with reference to FIG. 28.

In a diesel engine 300, electrolyzed water produced by an electrolysis apparatus (not shown) and stored in an electrolyzed water tank 312 and fuel (for example, light oil) stored in a fuel storage section 330 are supplied to a fuel mixing section 340 and mixed with each other to produce a mixed fuel. A known liquid-liquid mixing apparatus or gas-liquid mixing apparatus can be applied to this mixing. The mixed fuel is supplied to a common rail 370 through a first pump 362 and a second pump 364. A valve 354 is provided between the first pump 362 and the second pump 364 to return the fuel to the fuel mixing section 340 again. Such a passage for the fuel to return makes it possible to circulate the fuel, so that the fuel can be sprayed into a tank of the fuel mixing section 340 to obtain further mix.

The mixed fuel that has been supplied to the common rail 370 is supplied to a diesel engine chamber 380 through an injector 382 and is combusted. The mixed fuel that has become redundant before supplied to the diesel engine chamber (cylinder) 380 is returned to the common rail 370 through the second pump 362.

The common rail 370 may be provided with a fuel pressure sensor 372. The pumps 360 and 362, the valve 364, the fuel pressure sensor 372 and the like can be controlled by a control section (not shown).

### (3) Mixed Fuel Combustion System

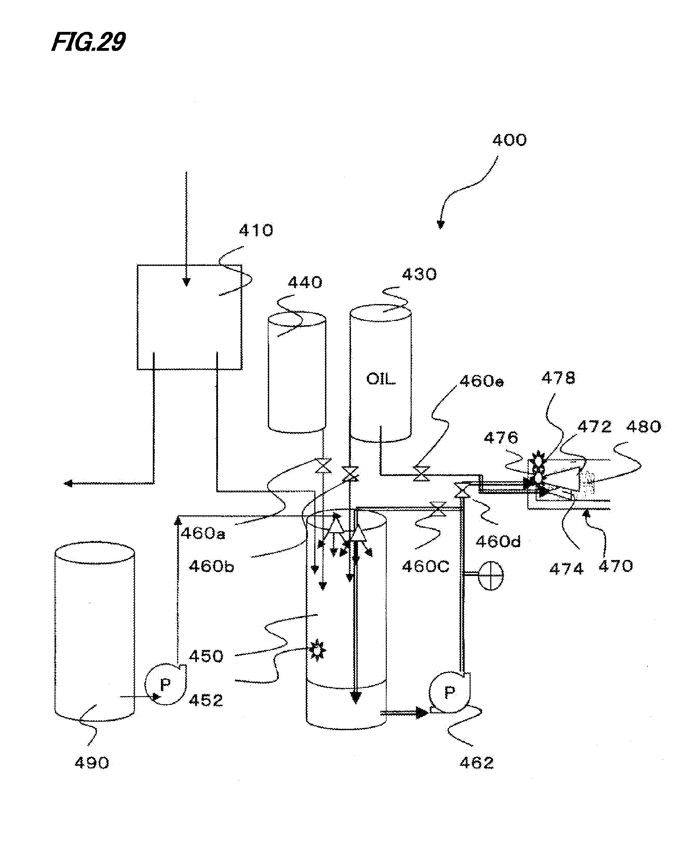

An application of a combustion system according to an embodiment to a mixed fuel combustion system will be explained with reference to FIG. 29.

Electrolyzed water produced in a cathode chamber of an electrolysis apparatus 410 is supplied to a fuel mixing section 440. Electrolyzed water produced in an anode chamber is discharged to another tank (not shown) for another use. Incidentally, the electrolyzed water may be supplied to the fuel mixing section 440 through an electrolyzed water storage section (not shown).

Alcohol is supplied from an alcohol storage section 440 to the fuel mixing section 450 by adjusting a first valve 462a, and oil fuel is supplied from an oil fuel storage section 430 to the fuel mixing section 450 by adjusting a second valve 460b. This mixing can be performed, for example, in the following manner. A pump 462 is driven while a third valve 460c is opened and a fourth valve 460d is closed. Thereby, fuel pumped up by the pump 462 is supplied to above the fuel mixing section 450, and is supplied (for example, supplied in a sprayed manner) again into the fuel mixing section 450. By circulating the fuel in this manner, mixing of the electrolyzed water or the fuel can be achieved.

When mixing of the fuel is performed in the fuel mixing section 450, the fuel is supplied to a combustion section 470 by opening the fourth valve 460d to ignite a primary burner 472. Incidentally, when the primary burner 472 is ignited, the oil fuel may be directly supplied from the oil fuel storage section 430 to the combustion section by opening a fifth valve 460e to ignite a secondary burner 474 so that the flame of the secondary burner 474 is used to ignite the primary burner 472. Incidentally, a vaporizing section 480 described above may be provided.

The fuel mixing section 450 may be provided with a fuel sensor 452. In addition, the combustion section 470 may be provided with a primary burner flame sensor 478 or a secondary burner flame sensor 476.

The above valves, sensors and the like can be controlled by a control section (not shown).

Wastewater stored in a wastewater tank 490 may be supplied to the fuel mixing section 450. Thereby, the wastewater itself can be combusted, so that wastewater treatment can easily be performed. Examples 1

### 1. First Example

When petroleum and the electrolyzed water produced in the cathode chamber of the above three-chamber electrolysis apparatus were mixed with each other at a ratio of 75 to 25, it was confirmed that the petroleum was dispersed in the electrolyzed water. When the mixed liquid of petroleum and electrolyzed water was combusted, it was visually confirmed that the mixed liquid combusted with a larger flame as compared with that obtained by mixing petroleum and tap water with each other at a ratio of 75 to 25.

### 2. Second Example

When petroleum, the electrolyzed water produced in the cathode chamber of the above three-chamber electrolysis apparatus, and isobutyl alcohol were mixed with each other at a ratio of 2 to 2 to 1, it was confirmed that the petroleum was dispersed in the electrolyzed water. When the mixed liquid of these was combusted, it was visually confirmed that the mixed liquid combusted with a larger flame as compared with that obtained by mixing petroleum, tap water, and isobutyl alcohol with each other at a ratio of 2 to 2 to 1. In addition, it was confirmed that the mixed liquid containing isobutyl alcohol combusted with a larger flame as compared with that obtained in the First Example.

The above embodiments may variously be modified within the scope of the present invention.

### Industrial Applicability

According to the combustion system of the present invention, combustion efficiency can be improved while fuel consumption is suppressed.

## Claims

1. A combustion system comprising:
an electrolyzed water producing section which electrolyzes water or an aqueous electrolytic solution to produce electrolyzed water;
a fuel storage section which stores fuel therein;
a fuel mixing section which mixes the electrolyzed water, which is produced in the electrolyzed water producing section and in which hydrogen is dissolved, and the fuel stored in the fuel storage section with each other; and
a combustion section which combusts a mixed fluid obtained in the fuel mixing section.

2. The combustion system according to claim 1, further comprising:
a mist forming section which forms the mixed liquid obtained in the fuel mixing section into mist, wherein
the mist formed in the mist forming section is combusted in the combustion section.

3. The combustion system according to claim 1, further comprising:
a hydrogen mixing section which mixes the electrolyzed water, which is produced in the electrolyzed water producing section and in which hydrogen is dissolved, and gaseous hydrogen generated in the electrolyzed water producing section with each other, before the electrolyzed water and the fuel are mixed with each other in the fuel mixing section.

4. A combustion system including a combustion section which combusts a mixed fluid obtained by mixing electrolyzed water and fuel with each other.

5. The combustion system according to any one of claims 1 to 4, further comprising:
a fluid compressing section which compresses the mixed fluid before the mixed fluid is supplied to the combustion section.

6. The combustion system according to any one of claims
1 to 5, wherein:
bubbles of hydrogen or oxygen are contained in the mixed fluid.

7. The combustion system according to any one of claims 1 to 5, wherein:
the mixed fluid is vaporized by combustion heat in the combustion section, and the mixed fluid vaporized is used for combustion in the combustion section.

8. The combustion system according to any one of claims 1 to 5, wherein:
the fuel contains an oil fuel and alcohol.

9. A combustion method comprising steps of:
(A) electrolyzing water in an electrolyzed water producing section to produce electrolyzed water;
(B) mixing the electrolyzed water, which is produced in the electrolyzed water producing section and in which hydrogen is dissolved, and fuel stored in a fuel storage section with each other; and
(C) combusting a mixed fluid obtained at the step (B) in a combustion section.

10. The combustion method according to claim 4, wherein:
the mixed fluid obtained at the step (B) is formed into mist before the step (C), and the mixed fluid formed into mist is combusted at the step (C).

11. The combustion method according to claim 3, further comprising a step of:
mixing the electrolyzed water, which is produced in the electrolyzed water producing section and in which hydrogen is dissolved, and gaseous hydrogen generated in the electrolyzed water producing section with each other before the electrolyzed water and the fuel are mixed with each other at the step (B).

12. A combustion method including a step of combusting a mixed fluid obtained by mixing electrolyzed water and fuel with each other in a combustion section.

13. The combustion method according to any one of claims 9 to 12, further comprising a step of:
compressing the mixed fluid in a fluid compressing section before the mixed fluid is supplied to the combustion section.

14. The combustion method according to any one of claims 9 to 12, wherein:
hydrogen or oxygen bubbles are contained in the mixed fluid.

15. The combustion method according to any one of claims 9 to 12, wherein:
the mixed fluid is vaporized by combustion heat in the combustion section, and the mixed fluid vaporized is used for combustion in the combustion section.

16. The combustion method according to claim 4 or 5, wherein:
the fuel contains an oil fuel and alcohol.

17. A fuel fluid comprising a fuel composed of an organic compound, and electrolyzed water obtained by electrolyzing water or an aqueous electrolytic solution.

18. The fuel fluid according to claim 17, wherein:
the electrolyzed water is produced by an apparatus for producing electrolyzed water, the apparatus for producing electrolyzed water comprising:
an anode chamber provided with an anode;
a cathode chamber provided with a cathode;
a middle chamber containing an aqueous electrolytic solution, provided between the anode chamber and the cathode chamber;
a first partitioning membrane, made of an anion exchange membrane, for separating the anode chamber and the middle chamber from each other; and
a second partitioning membrane, made of a cation exchange membrane, for separating the cathode chamber and the middle chamber from each other.

19. The fuel fluid according to claim 18, wherein:
the anode chamber and the cathode chamber are communicated with each other in the apparatus for producing electrolyzed water; and
water can move bidirectionally between the anode chamber and the cathode chamber.

20. The fuel fluid according to any one of claims 17 to 19, wherein:
the electrolyzed water comprises electrolyzed water produced on the cathode side and electrolyzed water produced on the anode side.

21. The fuel fluid according to any one of claims 17 to 19, wherein:
the percentage of the electrolyzed water in the fuel fluid is 70 percent by weight or less.

22. The fuel fluid according to any one of claims 17 to 19, wherein:
the fuel composed of an organic compound contains an oil fuel and alcohol.

23. A method for producing a fuel fluid, including a step of mixing a fuel composed of an organic compound, and electrolyzed water obtained by electrolyzing water or an aqueous electrolytic solution with each other.

24. An apparatus for producing a fuel fluid, including a mixing section for mixing a fuel composed of an organic compound, and electrolyzed water obtained by electrolyzing water or an aqueous electrolytic solution with each other.
